# EUROPEAN PATENT APPLICATION

(11) **EP 4 810 800 A1**
(43) Date of publication of application: **23.09.2026**
(21) Application number: 24893142.0
(22) Date of filing: 24.10.2024
(51) Int. Cl.: F04C 2/344, C08L 61/16

(54) **ROTOR, ROTOR ASSEMBLY, AND VANE PUMP AND ASSEMBLING METHOD THEREFOR**

(30) Priority: 21.11.2023 CN 202311552868; 21.11.2023 CN 202323136165 U; 29.11.2023 CN 202311611603
(71) Applicant: CAYE TECHNOLOGY (SUZHOU) CO., LTD., Suzhou, Jiangsu 215000 (CN)
(72) Inventor: WU, Peng, Suzhou, Jiangsu 215000 (CN)
(74) Representative: Michalski Hüttermann & Partner mbB
(86) International application number: PCT/CN2024/126914
(87) International publication number: WO 2025/107983

(57) **Abstract**

A vane pump includes a pump housing, a stator module and a rotor module. The pump housing includes a cavity, a liquid inlet channel and a liquid outlet channel. The stator module includes a through hole and an annular cavity. The rotor module and the stator module together form a fluid space with a radial width thereof being variably configured. The rotor module includes a rotating shaft, a number of vanes and a connecting component. The rotating shaft is rotatably installed in the through hole. Each vane is movably installed on a side wall of the rotating shaft. The vanes include first vanes arranged as a pair. The connecting component is connected to the first vanes in pairs. A rotor, a vane pump having the rotor, and an assembly method thereof are also disclosed.

## Description

### TECHNICAL FIELD

The present invention relates to the field of vane pump technology, specifically to a rotor, a vane pump having the rotor, and an assembly method thereof.

### BACKGROUND

A vane pump refers to a pump where vanes inside a rotor module come into contact with a stator ring within a stator module, enabling the transfer of a sucked liquid from an intake side to a discharge side. When the rotor of the vane pump rotates, it drives the vanes, which, under centrifugal force, press their tips tightly against an inner surface of a stator. This creates working volumes between two adjacent vanes, the rotor, and the inner surface of the stator, which first expand to suck oil and then contract to discharge it. Each complete rotation of the vane accomplishes one cycle of oil suction and discharge. However, in practical use, factors such as installation deviations and wear can cause the vanes to fail to move to their intended positions during rotor rotation. This prevents the vane tips from tightly adhering to the inner surface of the stator, reducing the reliability of oil suction and discharge in the vane pump and thereby shortening its overall service life.

In the field of commercial fully automatic coffee machines, vane pumps impose higher demands on the stability and precision of the machines. The vane pumps are primarily formed by a stator and a set of vanes mounted on the stator. The vanes slide along an internal curve of the stator, maintaining long-term contact and friction with the stator. Commonly used materials for stators and vanes include alloys, copper, or some wear-resistant engineering plastics and rubber materials. However, these materials are expensive, involve complex production processes, and often fail to meet the requirements for load-bearing capacity and wear resistance under high-load conditions, resulting in a shorter lifespan that adversely affects the performance of commercial fully automatic coffee machines.

### SUMMARY

A main object of the present invention is to propose a vane pump and an assembly method thereof, aiming to address the issue in conventional technology where the vanes of the vane pump cannot move to a target position, thereby reducing the reliability of the vane pump's use.

To achieve the above object, the present invention proposes a vane pump, including:
a pump housing, the pump housing forming a cavity, and the cavity including a liquid inlet channel and a liquid outlet channel;
a stator module, the stator module being disposed in the pump housing, the stator module being provided with a through hole therethrough along a first direction, an annular cavity being recessed around a periphery of the through hole, and the annular cavity being in communication with the through hole; and
a rotor module, the rotor module and the stator module together defining a fluid space in the annular cavity; the fluid space being in communication with the liquid inlet channel and the liquid outlet channel, respectively; a radial width of the fluid space being variably configured; the rotor module including a rotating shaft, a plurality of vanes and a connecting component; the rotating shaft extending along the first direction and being rotatably mounted in the through hole about a central axis of the rotating shaft; each of the vanes being movably mounted on a side wall of the rotating shaft along a radial direction of the rotating shaft; each of the vanes including two first vanes arranged as a pair; the two first vanes arranged as the pair being symmetrical about the central axis of the rotating shaft; and the connecting component being linkingly connected to each of the first vanes arranged as the pair.

Optionally, the rotating shaft includes a main shaft; a side wall of the main shaft is provided with a plurality of mounting recessed portions spaced apart along a circumference thereof; a bottom of each mounting recessed portion is provided with a mounting hole; and each of the vanes is movably mounted in the mounting recessed portion;
the rotor module further includes a plurality of movable pins; each of the movable pins is movably passed through a corresponding mounting hole along the radial direction of the rotating shaft, and is connected to a corresponding vane;
wherein two mounting holes corresponding to the two first vanes arranged as the pair are in communication, and corresponding two movable pins are connected to constitute the connecting component.

Optionally, the vane has a first end disposed in the mounting recessed portion and a second end exposed outside the mounting recessed portion; in a direction from the first end to the second end, at least a portion of the vane adjacent to the second end has a gradually narrowing width.

Optionally, one axial end of the main shaft adjacent to each mounting hole is provided with a recessed portion, and the recessed portion is in communication with each mounting hole.

Optionally, the vanes are provided in an even number equally spaced along a circumference of the rotating shaft, such that each of the vanes is the first vane.

Optionally, the rotating shaft includes a main shaft and an extension shaft integrally formed with the main shaft along an axial direction of the rotating shaft; each of the vanes is disposed on the main shaft; the extension shaft extends toward an opening of the through hole;
the vane pump further includes a driver, the driver includes a rotary output shaft, and the rotary output shaft is detachably connected to the extension shaft.

Optionally, the stator module includes two disc-shaped components spaced apart along the first direction, and an mounting ring connected between the two disc-shaped components; the two disc-shaped components are provided with the through hole therethrough; the two disc-shaped components and the mounting ring together define the annular cavity;
an inner diameter of the mounting ring varies along a circumference of the mounting ring; the two disc-shaped components have disc end surfaces facing each other; the disc end surfaces are recessed to form at least one recessed portion; and the at least one recessed portion is in communication with the liquid inlet channel and the liquid outlet channel, respectively.

Optionally, outer peripheral side walls of the two disc-shaped components and the mounting ring are provided with anti-rotation grooves axially at corresponding positions;
the stator module further includes an anti-rotation pin, and the anti-rotation pin is sequentially installed through the anti-rotation grooves of each of the disc-shaped components and the mounting ring.

Optionally, the cavity extends through the pump housing along the first direction to form two openings; and the liquid inlet channel and the liquid outlet channel are disposed beside the openings;
the vane pump further includes two end covers, and the two end covers are detachably covered on the two openings, respectively.

Optionally, the vane pump further includes:
a sealing cover, the sealing cover being connected to a shaft end of the main shaft, and covering an opening of the groove; and
a sealing component, the sealing component being clamped between the shaft end of the main shaft and the sealing cover.

Optionally, the liquid inlet channel and the liquid outlet channel are spaced apart and extend side by side in a same direction; the pump housing defines a connecting channel between the liquid inlet channel and the liquid outlet channel; and the connecting channel is in communication with the liquid inlet channel and the liquid outlet channel;
the vane pump further includes an opening/closing component, and the opening/closing component is movably disposed in the connecting channel to control conduction and blockage of the connecting channel.

Furthermore, to achieve the aforementioned object, the present invention also provides a method for assembling a vane pump, including:
providing the rotating shaft, the plurality of vanes and the connecting component, and sequentially installing each of the vanes onto the rotating shaft; wherein the first vanes arranged as the pair are installed onto the rotating shaft via the connecting component;
providing one disc-shaped component as a first disc-shaped component, fitting the through hole of the first disc-shaped component over an outer side of a section of the rotating shaft, and stopping and limiting the disc end surface of the first disc-shaped component on one axial side of each of the vanes;
providing the mounting ring, fitting the mounting ring over a radially outer side of each of the vanes;
providing another disc-shaped component as a second disc-shaped component, fitting the through hole of the second disc-shaped component over an outer side of another section of the rotating shaft, and stopping and limiting the disc end surface of the second disc-shaped component on another axial side of each of the vanes;
aligning the anti-rotation grooves of the first disc-shaped component, the mounting ring and the second disc-shaped component; and
providing the anti-rotation pin, and sequentially installing the anti-rotation pin through the anti-rotation grooves of the first disc-shaped component, the mounting ring and the second disc-shaped component.

The present invention proposes a rotor including a rotating shaft; wherein a side wall of the rotating shaft at least at a local shaft section thereof is provided with a plurality of vane grooves spaced apart along a circumference of the rotating shaft; and a bottom of each vane recessed portion is provided with a through hole;
wherein at least two of the vane grooves are symmetrical about a central axis of the rotating shaft, and corresponding through holes are arranged in communication.

Optionally, the number of vane grooves provided is an even number, and each of the vane grooves is equally spaced along the circumference of the rotating shaft.

Optionally, the number of vane grooves provided is four.

Optionally, the rotating shaft includes a first rotating shaft and a second rotating shaft axially connected to the first rotating shaft in sequence; each of the vane grooves is disposed on the first rotating shaft; and the second rotating shaft is configured for connection with a driver.

Optionally, the first rotating shaft includes a stepped shaft section which protrudes laterally, and an assembly shaft section which is disposed on two axial sides of the stepped shaft section, respectively; each of the vane grooves is opened on a side wall of the stepped shaft section; and a recessed portion bottom surface of each vane recessed portion is not higher than a radial side surface of the assembly shaft section.

Optionally, a shaft end of the assembly shaft section away from the second rotating shaft is provided with a recessed portion, and the through holes are in communication via the groove.

Optionally, the first rotating shaft and the second rotating shaft are integrally formed.

Optionally, a shaft end of the second rotating shaft is provided with a connecting portion, and the connecting portion is configured for mating connection with a mating portion provided on an output shaft of a driver.

Furthermore, to achieve the aforementioned object, the present invention also provides a rotor module, including:
a rotor including a rotating shaft; wherein a side wall of the rotating shaft at least at a local shaft section thereof is provided with a plurality of vane grooves spaced apart along a circumference of the rotating shaft; and a bottom of each vane recessed portion is provided with a through hole; wherein at least two of the vane grooves are symmetrical about a central axis of the rotating shaft, and corresponding through holes are arranged in communication;
a plurality of vanes arranged in one-to-one correspondence with the plurality of vane grooves, and the plurality of vanes being slidably mounted in the plurality of vane grooves along a radial direction of the rotating shaft; and
a plurality of pin bodies movably mounted in the through holes along the radial direction of the rotating shaft, and connected to corresponding vanes; wherein two pin bodies corresponding to two symmetrically arranged vane grooves are linkingly connected, forming a connecting component.

Furthermore, to achieve the aforementioned object, the present invention also provides vane pump including a rotor module, the rotor module including:
a rotor including a rotating shaft; wherein a side wall of the rotating shaft at least at a local shaft section thereof is provided with a plurality of vane grooves spaced apart along a circumference of the rotating shaft; and a bottom of each vane recessed portion is provided with a through hole; wherein at least two of the vane grooves are symmetrical about a central axis of the rotating shaft, and corresponding through holes are arranged in communication;
a plurality of vanes arranged in one-to-one correspondence with the plurality of vane grooves, and the plurality of vanes being slidably mounted in the plurality of vane grooves along a radial direction of the rotating shaft; and
a plurality of pin bodies movably mounted in the through holes along the radial direction of the rotating shaft, and connected to corresponding vanes; wherein two pin bodies corresponding to two symmetrically arranged vane grooves are linkingly connected, forming a connecting component.

Furthermore, during the rotation of the shaft, two pin bodies corresponding to symmetrically arranged vane grooves are interconnected to form a connecting component, enabling the corresponding two vanes to be linked together. The connecting component helps coordinate with the centrifugal force generated by the shaft's rotation to adjust each of the corresponding two vanes to their respective target positions. This not only achieves the goal of having the tips of the vanes tightly adhere to the inner wall of the stator module in the vane pump but also reduces sliding wear between them to some extent, thereby contributing to improving the operational quality and reliability of the vane pump.

### BRIEF DESCRIPTION OF DRAWINGS

To provide a clearer explanation of the technical solutions in the embodiments of the present invention or in the prior art, the following will briefly introduce the drawings required for describing the embodiments. Obviously, the drawings in the following description are merely some embodiments of the present invention. It is understandable to those of ordinary skill in the art that other drawings can be obtained based on the structures shown in these drawings without creative effort.
FIG. 1 is a perspective schematic view of a vane pump provided by an embodiment of the present invention;
FIG. 2 is an exploded schematic view of a main structure of the vane pump in FIG. 1;
FIG. 3 is a perspective schematic view of a rotating shaft in FIG. 2 from a first viewing angle;
FIG. 4 is a perspective schematic view of the rotating shaft in FIG. 2 from a second viewing angle;
FIG. 5 is a perspective schematic view of a vane in FIG. 2;
FIG. 6 is a structural schematic view of an mounting ring in FIG. 2;
FIG. 7 is a structural schematic view of a impeller in FIG. 2;
FIG. 8 is a top view structural schematic view of the vane pump in FIG. 1 without a driver assembled;
FIG. 9 is a cross-sectional structural schematic view at section A-A in FIG. 8;
FIG. 10 is a cross-sectional structural schematic view at section B-B in FIG. 8;
FIG. 11 is a cross-sectional structural schematic view at section C-C in FIG. 8; and
FIG. 12 is a flowchart schematic view of an assembly method for the vane pump provided by an embodiment of the present invention.

### Reference numerals:

1 vane pump; 100 pump housing; 110 cavity; 111 liquid inlet channel; 112 liquid outlet channel; 113 connecting channel; 114 opening; 200 stator module; 201 through hole; 202 annular cavity; 210 disc-shaped component; 211 disc end surface; 212 recessed portion; 220 mounting ring; 230 anti-rotation groove; 240 anti-rotation pin; 300 rotor module; 310 rotating shaft; 311 main shaft; 311a annular step segment; 311b assembly segment; 311c mounting recessed portion; 311d mounting hole; 311e groove; 312 extension shaft; 312a connection portion; 321 first vane; 321a first end; 321b second end; 330 connecting component; 340 movable pin; 400 driver; 410 output shaft; 411 mating structure; 500 end cover; 600 sealing cover; 700 sealing component.

The realization of the objects, functional features, and advantages of the present invention will be further explained in conjunction with the embodiments and with reference to the accompanying drawings.

### DETAILED DESCRIPTION

The technical solutions in the embodiments of the present invention will be described clearly and completely in conjunction with the accompanying drawings in the embodiments of the present invention. Obviously, the described embodiments are only a part of the embodiments of the present invention, not all of them. Based on the embodiments of the present invention, all other embodiments obtained by those of ordinary skill in the art without creative efforts shall fall within the protection scope of the present invention.

It should be noted that if directional indications (such as top, bottom, left, right, front, back, etc.) are involved in the embodiments of the present invention, these directional indications are only used to explain the relative positional relationships and movements between components in a specific posture (as shown in the accompanying drawings). If the specific posture changes, the directional indications will change accordingly.

Besides, if descriptions such as "first", "second", etc., are involved in the embodiments of the present invention, these terms are used for descriptive purposes only and should not be construed as indicating or implying relative importance or implicitly specifying the quantity of the indicated technical features. Thus, features defined with "first", "second", etc., may explicitly or implicitly include at least one such feature. Furthermore, the meaning of "and/or" appearing throughout the text includes three parallel options. Taking "A and/or B" as an example, it includes option A, option B, and an option where both A and B are satisfied. Additionally, technical solutions from various embodiments may be combined, but this must be based on what can be achieved by those of ordinary skill in the art. When the combination of technical solutions results in contradictions or is unachievable, such a combination should be considered non-existent and not within the scope of protection claimed by the present invention.

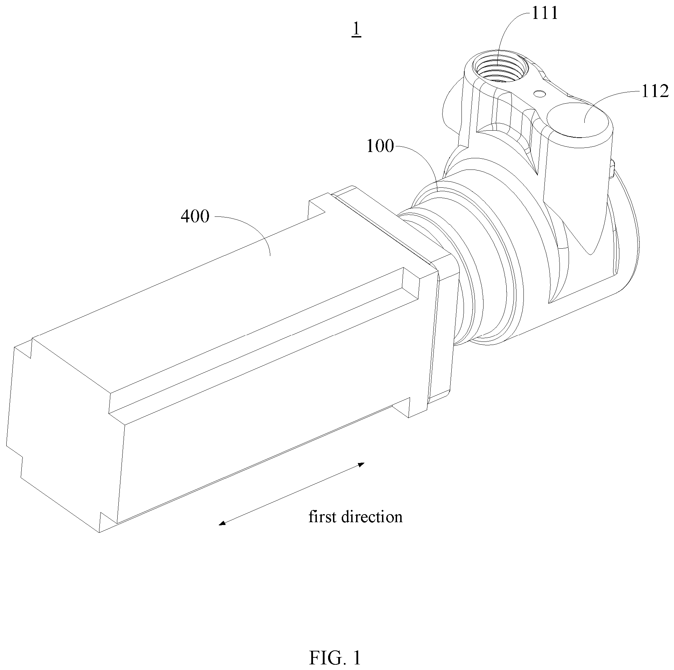

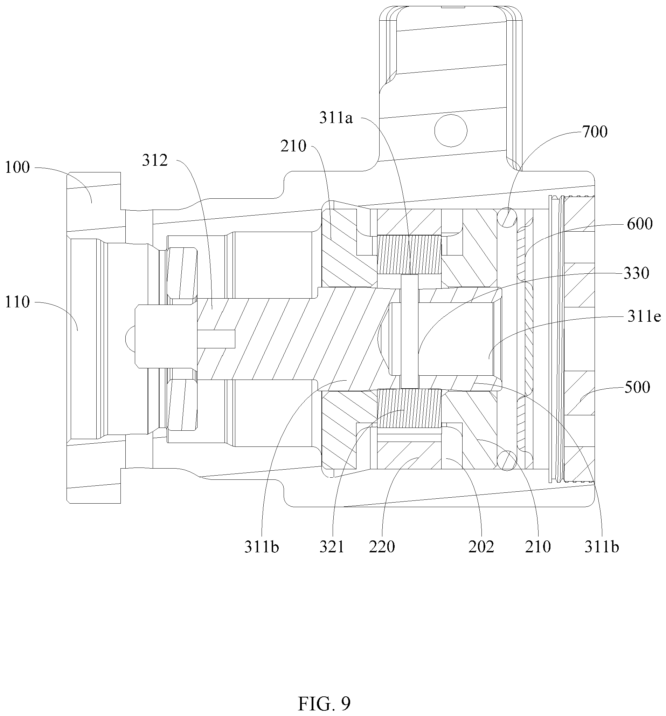

Referring to FIG. 1, FIG. 2, FIG. 8 and FIG. 9, the present invention provides a vane pump 1. The vane pump 1 includes a pump housing 100, a stator module 200, and a rotor module 300. The pump housing 100 forms a cavity 110, which is provided with a liquid inlet channel 111 and a liquid outlet channel 112. The stator module 200 is disposed in the pump housing 100. The stator module 200 defines a through hole 201 extending therethrough along a first direction. An annular cavity 202 is recessed around a periphery of the through hole 201, and the annular cavity 202 is in communication with the through hole 201. The rotor module 300 and the stator module 200 together define a fluid space in the annular cavity 202. The fluid space is in communication with the liquid inlet channel 111 and the liquid outlet channel 112, respectively. A radial width of the fluid space is variably configured.

The rotor module 300 includes a rotor, a plurality of vanes, and a plurality of pin bodies 340. The rotor includes a rotating shaft 310. A side wall of the rotating shaft 310 is provided with a plurality of vane grooves 311c spaced along a circumference of the side wall of the rotating shaft 310, at least in a partial axial section. A bottom of each vane recessed portion 311c includes a through hole 311d. At least two of the vane grooves 311c are symmetric about a central axis of the rotating shaft 310, and corresponding through holes 311d are interconnected. The plurality of vanes and the plurality of vane grooves 311c are in a one-to-one correspondence manner, and each vane is slidably installed in a corresponding vane recessed portion 311c along a radial direction of the rotating shaft 310. The plurality of pin bodies 340 are movably installed at each through hole 311d along the radial direction of the rotating shaft 310 and are connected to the corresponding vanes. Two vanes corresponding to the symmetrically arranged two vane grooves 311c are a pair of first vanes 321. The two first vanes 321 in the pair are symmetric about the central axis of the rotating shaft 310. The two pin bodies 340 corresponding to the symmetrically arranged two vane grooves 311c are interconnected to form a connecting component 330.

In a technical solution provided by the present invention, due to the varying radial width of the fluid space, when the rotating shaft 310 rotates and drives each vane to slide in coordination with an inner wall of the annular cavity 202, the working volume of the fluid space changes. This achieves the purpose of drawing external liquid into the fluid space through the liquid inlet channel 111 and expelling the liquid from the fluid space outward through the liquid outlet channel 112. During this process, the two first vanes 321 arranged in the pair are interconnected via the connecting component 330. This helps, in conjunction with the centrifugal force generated by the rotation of the rotating shaft 310, to adjust each of the two first vanes 321 arranged as a pair to their respective target positions. This not only ensures that the tips of the first vanes 321 closely adhere to the inner wall of the annular cavity 202 but also reduces sliding wear between them to some extent, thereby enhancing the operational quality and reliability of the vane pump 1.

It is understandable that the vane pump 1 includes, but is not limited to, two main components: a working portion and a driving portion. Among these, the working portion includes the pump housing 100, the stator module 200, and the rotor module 300 as described above. Since, during operation, the rotating shaft 310 in the rotor module 300 rotates about its axis in the first direction, the driving portion is configured as a single component or multiple components with rotational output. Specifically, the driving portion can be directly configured to include only the driver 400. In this case, the driver 400 can be a motor or a rotary cylinder with rotational output. Alternatively, the driving portion can be configured to include the driver 400 and a transmission assembly. When the driver 400 is a component with rotational output, such as a motor or a rotary cylinder, the transmission assembly can be set up as needed to adjust the rotational output parameters, for example, a gear set, a worm gear mechanism, etc. When the driver 400 is a component with linear output, such as a linear cylinder, the transmission assembly can be set up as needed to convert linear displacement into rotational displacement, for example, a rack and pinion mechanism, a screw mechanism, etc.

However, for ease of understanding, and to provide sufficient and stable rotational driving force to the rotating shaft 310, in the following embodiments, the working portion is configured to include only the driver 400. Moreover, the driver 400, for example, is a motor, which has a rotary output shaft 410. The output shaft 410 is connected to the rotating shaft 310, and a rotational axis of the output shaft 410 is substantially collinear with a rotational axis of the rotating shaft 310.

In the working portion, the specific form of the pump housing 100 is not limited. Specifically, the cavity 110 of the pump housing 100 at least extends through an outer wall at one end of the pump housing 100 in the first direction, forming an opening 114 at this outer wall (for ease of understanding, the opening 114 is defined as a first opening for the description afterwards). The first opening allows the output shaft 410 of the driver 400 to extend into the cavity 110 and connect with a corresponding end of the rotating shaft 310 in the rotor module 300. Alternatively, the first opening allows the corresponding end of the rotating shaft 310 to extend out and connect with the output shaft 410 of the driver 400. Furthermore, the vane pump 1 further includes an end cover 500 (for ease of understanding, the end cover 500 is defined as a first end cover for the description afterwards). The first end cover is sealingly connected to the pump housing 100 and covers the first opening. The first end cover allows the output shaft 410 of the driver 400 and/or the rotating shaft 310 to pass through.

In a further embodiment, the cavity 110 of the pump housing 100 may extend through the outer wall at two ends of the pump housing 100 in the first direction, forming two openings 114 at the outer wall. One of the two openings 114 is the aforementioned first opening, and the other of the two openings 114 is a second opening. Furthermore, the vane pump 1 includes two end covers 500. One of the two end covers 500 is the aforementioned first end cover, and the other of the two end covers 500 is a second end cover. The second end cover is sealingly connected to the pump housing 100 and covers the second opening.

Given the above, the liquid inlet channel 111 and the liquid outlet channel 112 are arranged on the side wall of the pump housing 100 between the first opening and the second opening. The specific form of the liquid inlet channel 111/liquid outlet channel 112 is not limited. The liquid inlet channel 111/liquid outlet channel 112 can be created on an inherent shell structure of the pump housing 100. Alternatively, the liquid inlet channel 111/liquid outlet channel 112 can also be formed by thickening or thinning a local part of the shell structure of the pump housing 100 and then creating the channels at the thickened or thinned area. The liquid inlet channel 111/liquid outlet channel 112 can be straight holes, for example, extending radially, axially, or tangentially along the rotating shaft 310. The liquid inlet channel 111/liquid outlet channel 112 can also be curved holes, for example, extending circumferentially along the rotating shaft 310, or spirally extending both circumferentially and axially along the rotating shaft 310. Of course, the liquid inlet channel 111/liquid outlet channel 112 can also be a combination of straight and curved holes, which will not be elaborated further.

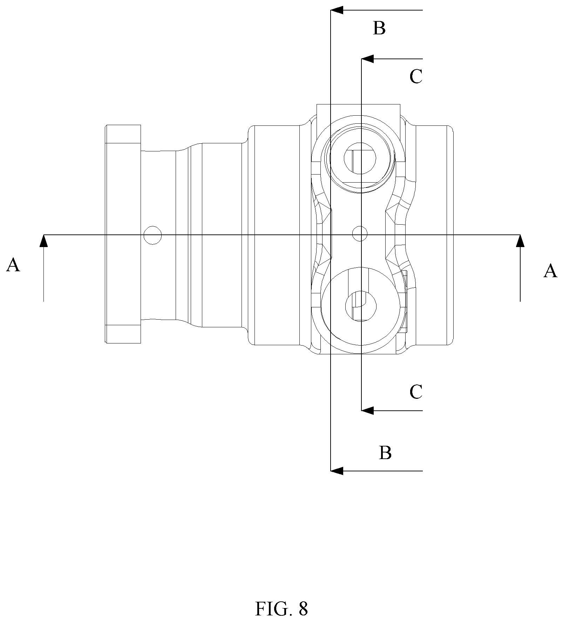

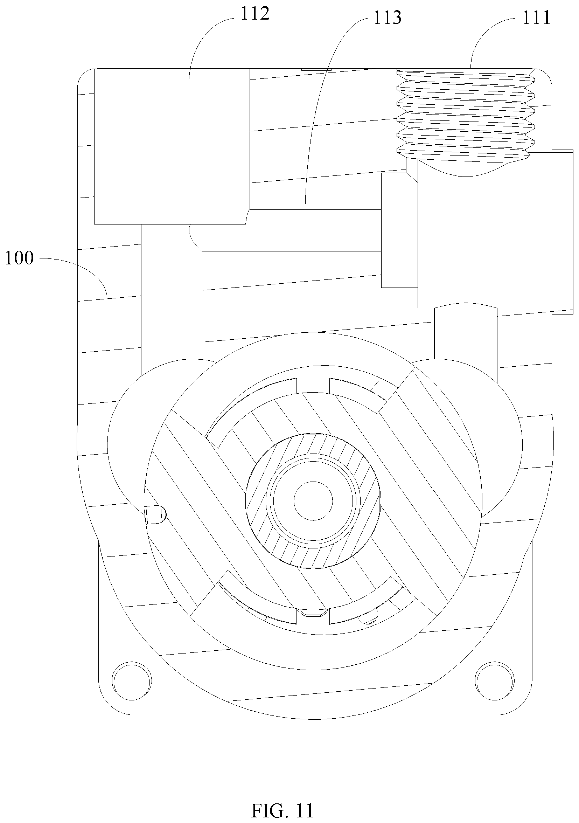

Referring to FIG. 8 and FIG. 11, in a further embodiment, the liquid inlet channel 111 and the liquid outlet channel 112 are arranged at intervals and extend side by side in a same direction. Specifically, as shown in the drawings, the liquid inlet channel 111 and the liquid outlet channel 112 extend along the radial direction of the rotating shaft 310, and are spaced apart along a circumferential direction of the rotating shaft 310. The pump housing 100 defines a connecting channel 113 between the liquid inlet channel 111 and the liquid outlet channel 112. The connecting channel 113 is in communication with the liquid inlet channel 111 and the liquid outlet channel 112. Similarly to the liquid inlet channel 111 and the liquid outlet channel 112 described above, the shape, extension direction, etc., of the connecting channel 113 are not limited. For example, as shown in FIG. 11, the connecting channel 113 extends approximately along a tangential direction of the rotating shaft 310 at its location. The vane pump 1 further includes an opening/closing component. The opening/closing component is movably arranged in the connecting channel 113 to regulate the conduction and interruption of the connecting channel 113. Specifically, the opening/closing component can be set as, for example, a regulating valve or other structures that can adjust the opening degree of the connecting channel 113. Specifically, the adjustment stroke of the opening/closing component may be related to the pressure in the connecting channel 113, the liquid inlet channel 111, and/or the liquid outlet channel 112, for instance, the opening/closing component may be associated with the pressure at the liquid outlet channel 112. When the pressure at the liquid outlet channel 112 exceeds a preset threshold, the opening/closing component is in an open state, connecting the liquid inlet channel 111 and the liquid outlet channel 112, allowing liquid at the liquid outlet channel 112 to flow to the liquid inlet channel 111 via the connecting channel 113. Conversely, when the pressure at the liquid outlet channel 112 does not exceed the preset threshold, the opening/closing component is in a closed state, isolating the liquid inlet channel 111 and the liquid outlet channel 112, so that the liquid at the liquid outlet channel 112 and the liquid at the liquid inlet channel 111 flow independently.

Furthermore, in a further solution, a filtering structure may be provided at the liquid inlet channel 111, the liquid outlet channel 112, and/or the connecting channel 113 as needed. The filtering structure is configured to filter the passing liquid, trapping impurities. For example, when the filtering structure is installed at the liquid inlet channel 111, it helps ensure that the liquid entering the annular cavity 202 is essentially free of impurities, preventing orifice blockages or movement delays in the annular cavity 202.

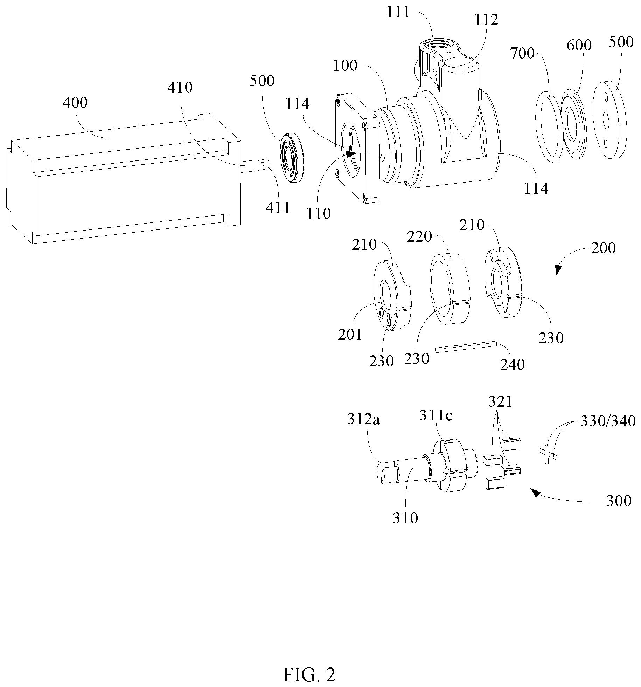

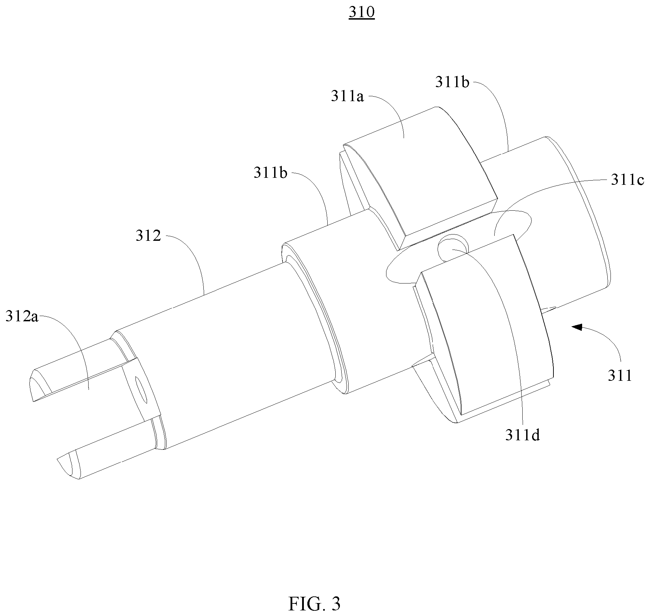

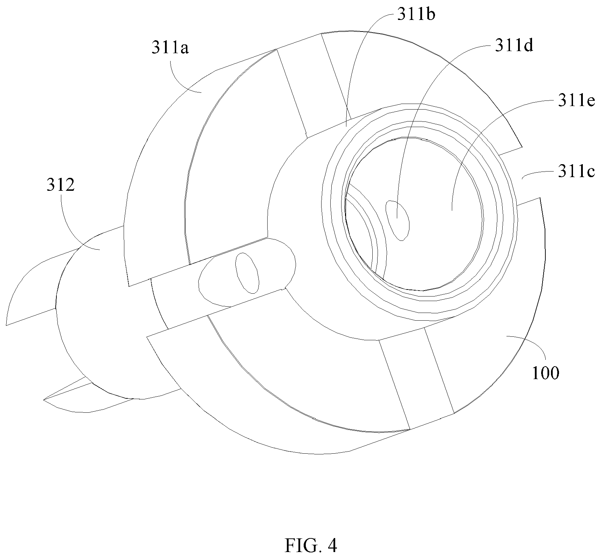

In light of any of the aforementioned embodiments, and with reference to FIG. 2 to FIG. 4, in a further solution, the rotor shaft 310 in the rotor module 300 may be configured to include a first rotating shaft 311 and a second rotating shaft 312 that are integrally formed along its axial direction. Each of the vanes is arranged on the first rotating shaft 311. The second rotating shaft 312 extends toward an opening of the through hole 201. The vane pump 1 further includes a driver 400. The driver 400 has a rotary output shaft 410. The rotary output shaft 410 is detachably connected to the second rotating shaft 312. The arrangement of the first rotating shaft 311 and the second rotating shaft 312 allows a portion of the rotor shaft 310 for vane installation and a portion for connection with the driver 400 to be distinguished, ensuring that the structural strength and other properties of the vane installation portion and the driver connection portion meet the required specifications. For example, by altering structural parameters, materials, etc., of the first rotating shaft 311 and the second rotating shaft 312, they can be endowed with different wear resistance, stiffness, thermal expansion coefficients, and the like.

Among them, the first rotating shaft 311 and the second rotating shaft 312 can be integrally formed, which helps simplify the installation operations of the first rotating shaft 311 and the second rotating shaft 312, and ensures that the materials of the first rotating shaft 311 and the second rotating shaft 312 are essentially consistent, contributing to structural stability. Of course, the first rotating shaft 311 and the second rotating shaft 312 can also be connected in a detachable or non-detachable manner after being formed separately. Here, detachable connections may include, but are not limited to, one or several methods such as screw fastening, snap-fit fastening, adhesive bonding, magnetic attraction, etc. Non-detachable connections may include, but are not limited to, one or several methods such as welding fixation, hot pressing fixation, etc.

Specifically, referring to FIG. 2, in one embodiment, an end of the second shaft 312 is provided with a connection portion 312a. The connection portion 312a is designed to adaptively connect with a mating portion 411 set on the output shaft 410 of the driver 400. The arrangement of the connection portion 312a and the mating portion 411 helps simplify and standardize the connection operation between the output shaft 410 of the driver 400 and the second shaft 312. The specific design of the connection portion 312a and the mating portion 411 is not limited and can be configured according to practical needs. For example, but not limited to, one of the connection portion 312a and the mating portion 411 may be a threaded fastener, while the other has a threaded hole at a corresponding location for threaded engagement. Alternatively, one may be a snap-fit, and the other may have a corresponding snap hole for secure fastening, among other possibilities.

Referring to FIG. 2 to FIG. 4, in one embodiment, the rotating shaft 310 includes a first rotating shaft 311. A side wall of the first rotating shaft 311 is circumferentially spaced with multiple vane grooves 311c. A bottom of each vane recessed portion 311c is provided with a through hole 311d. Each vane is movably installed in a corresponding vane recessed portion 311c. The rotor module 300 further includes a plurality of pin bodies 340. Each pin body 340 is movably inserted through a corresponding through hole 311d along the radial direction of the rotating shaft 310 and is connected to a corresponding vane. A depth direction of the vane recessed portion 311c is approximately the radial direction of the first rotating shaft 311. The vane is slidably connected and matched with the vane recessed portion 311c along the radial direction of the first rotating shaft 311, enabling it to have a retracted state where it moves to abut against the bottom wall of the vane recessed portion 311c, and an extended state where it moves to extend out of the vane recessed portion 311c and slidably abuts against the inner wall of the annular cavity 202 at the corresponding position. Each pin body 340 connects each vane and each vane recessed portion 311c one-to-one, facilitating the mutual switching of each vane between the retracted and extended states. A length of the pin body 340 is longer than a diameter of the assembly shaft segment 311b to ensure that when the pin body 340 is inserted into the through hole 311d, at least one end of the pin body 340 extends outward from the assembly shaft segment 311b and into the vane recessed portion 311c. Meanwhile, when the opposing first vanes 321 are installed into the vane grooves 311c, at least one first vane 321 extends outward beyond the step shaft segment 311a. That is, a combined length of the two first vanes 321 and the pin body 340 is greater than a diameter of the step shaft segment 311a.

In practical applications, the through hole 311d can be a countersunk hole located at the bottom wall of the vane recessed portion 311c, according to actual needs. One section of the pin body 340 extends into the countersunk hole, while another section protrudes outside it. For the two first vanes 321 arranged as the pair, corresponding two vane grooves 311c are also symmetrical about the central axis of the rotating shaft 310. Based on this, the two through holes 311d corresponding to the two first vanes 321 arranged as the pair connect to form an elongated hole structure. Moreover, the two pin bodies 340 corresponding to the two first vanes 321 arranged as the pair connect to form an elongated pin structure, which constitutes the connecting component 330. The connecting component 330 is designed as a rigid structure, ensuring that its length along the radial direction of the first rotating shaft 311 is essentially fixed, meaning the spacing between the two first vanes 321 arranged as the pair is largely constant. Consequently, when one of the two first vanes 321 arranged as the pair contacts the inner wall of the annular cavity 202 and retracts by a certain stroke, the other is driven by the connecting component 330 to extend by the same stroke. Compared to existing technologies that rely on vane rotational inertia or springs, this approach helps maintain contact between each first vane 321 and the inner wall of the annular cavity 202 while allowing for appropriate adjustment of the contact force between them as needed. This can reduce frictional wear or moderately increase the contact force to ensure that the volume change of the fluid space between adjacent vanes meets the required specifications.

However, it should be noted that under the action of the connecting component 330, when one first vane 321 connected to it slides and abuts against the inner wall on one side of the annular cavity 202, the other first vane 321 connected to it can be set to directly slide and abut against the inner wall on the other side of the annular cavity 202, or be set to maintain a certain gap from the inner wall on the other side of the annular cavity 202. When the rotor rotates, the first vane 321 will undergo a certain radial outward movement due to centrifugal force, sufficiently compensating for the aforementioned gap and ensuring the sliding abutment between the first vane 321 and the inner wall of the annular cavity 202.

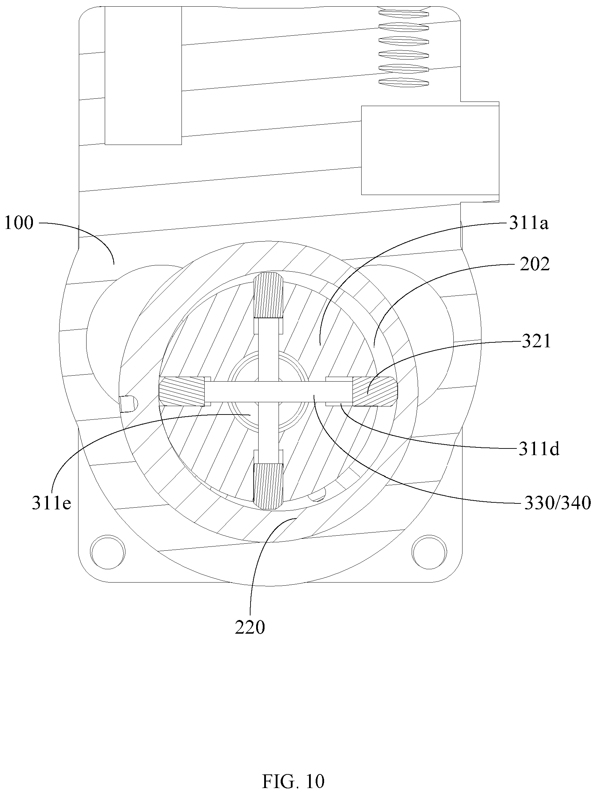

Specifically, in one embodiment, the first rotating shaft 311 includes a laterally protruding step shaft segment 311a and an assembly shaft segment 311b located on two axial sides of the step shaft segment 311a. Each of the vane grooves 311c is formed on a side wall of the step shaft segment 311a, and a bottom surface of each vane recessed portion 311c is not higher than a radial side surface of the assembly shaft segment 311b. The arrangement of the step shaft segment 311a allows the vane grooves 311c to achieve sufficient depth while ensuring the required structural strength of the first rotating shaft 311. The assembly shaft segment 311b enable the structures located on both axial sides of the annular cavity 202 in the stator module 200 to be installed and matched, so that at least a portion of the step shaft segment 311a is accommodated in the annular cavity 202. During the operation of the vane pump 1, some fluid flows through the vane grooves 311c to both axial sides of the vanes. By ensuring that the bottom surface of the vane grooves 311c is not higher than the radial side surface of the assembly shaft segment 311b, the formation of blocking structures is avoided, preventing unnecessary obstruction to the fluid flow. In light of the above, in one embodiment, the vanes are evenly spaced along the circumference of the rotating shaft 310 and arranged in an even number, so that each vane is the first vane 321. That is, each vane is paired with another vane, and the two are interconnected via the connecting component 330. In practical applications, as shown in FIG. 2, FIG. 4 and FIG. 10, the vanes are evenly spaced along the circumference of the rotating shaft 310 and arranged in four. These four vanes divide the first rotating shaft 311/step shaft segment 311a into four equal parts, forming two pairs of first vanes 321, which reduces the number of pin bodies 340 to two. This helps simplify the overall structure of the machine while ensuring its operational quality.

Furthermore, in one embodiment, a recessed portion 311e is formed at one axial end of the first rotating shaft 311 adjacent to each of the through holes 311d. The recessed portion 311e communicates with each of the through holes 311d. As mentioned above, when the first rotating shaft 311 includes the step shaft segment 311a and the two assembly shaft segments 311b, the recessed portion 311e is formed at an axial end of the assembly shaft segment 311b that is farther away from the second rotating shaft 312 among the two assembly shaft segments 311b. The provision of this recessed portion 311e, on one hand, facilitates the forming of each through hole 311d, and on the other hand, when all vanes are first vanes 321, it facilitates communication between corresponding groups of through holes 311d. Additionally, the setting of the recessed portion 311e also helps visualize the installation of each pin body 340/connecting component 330, making disassembly, replacement, and daily maintenance more convenient. The pin body 340 can be formed by splitting a cylindrical metal rod in half, allowing the through holes 311d to be designed as intersecting circular holes. As a result, the pin body 340 can be inserted into the circular holes, and the circular outer contour better fits the pin body 340. At the same time, the perpendicularly intersecting split planes contact each other more smoothly and with less friction, reducing wear and the difficulty of processing and assembly.

Furthermore, referring to FIG. 2, in one embodiment, the vane pump 1 further includes a sealing cover 600 and a sealing component 700. The sealing cover 600 is connected to the shaft end of the first rotating shaft 311 and covers the opening of the recessed portion 311e. The sealing component 700 is sandwiched between the shaft end of the first rotating shaft 311 and the sealing cover 600. The sealing cover 600 can be movably closed at the recessed portion 311e to prevent liquid in the vane slot 311c from leaking through the through hole 311d and the recessed portion 311e. The sealing component 700 can be specifically configured as an elastic sealing ring, such as a rubber sealing ring, or as a rigid sealing ring, as long as it ensures a tight connection between the sealing cover 600 and the shaft end of the first rotating shaft 311.

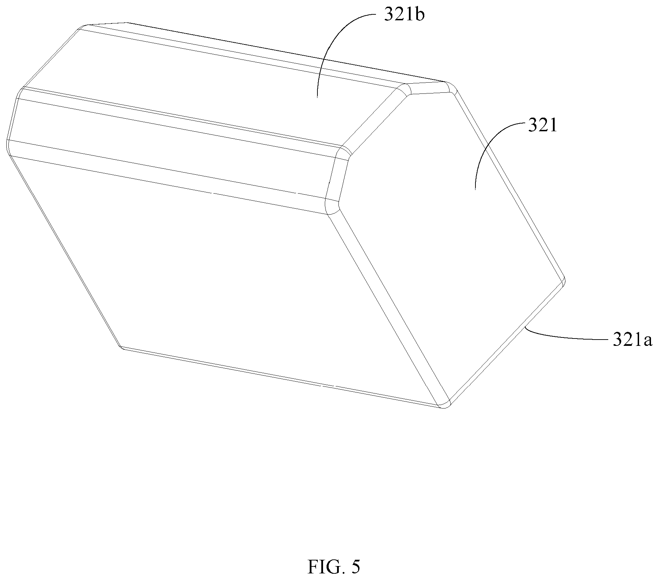

Referring to FIG. 5, in one embodiment, the vane has a first end 321a located in the vane recessed portion 311c and a second end 321b exposed outside the vane recessed portion 311c. In a direction from the first end 321a to the second end 321b, at least a portion of the vane adjacent to the second end 321b is configured to gradually narrow in width. This arrangement, on one hand, minimizes the sliding contact surface between the vane and the inner wall of the annular cavity 202, reducing frictional damping between them; on the other hand, it forms a flow guide surface on the wall surfaces on both circumferential sides of the first end 321a of the rotating shaft 310. The flow guide surface is specifically an inclined flat surface or an arc surface, which facilitates the smooth flow of liquid.

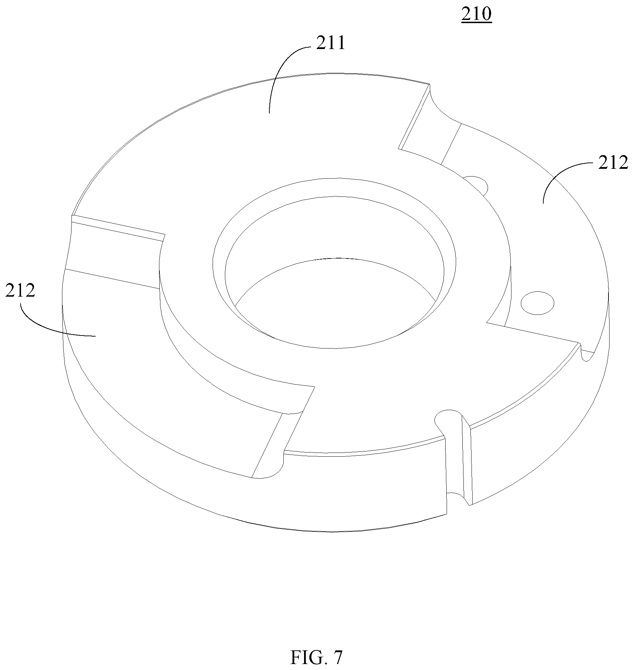

In view of any of the above embodiments, the through hole 201 and the annular cavity 202 in the stator module 200 may be independently defined by a single component, which is generally cylindrical in shape. Alternatively, referring to FIG. 2, FIG. 6 and FIG. 7, in one embodiment, the stator module 200 includes two impellers 210 arranged at intervals along the first direction, and a mounting ring 220 connecting the two impellers 210. The two impellers 210 are penetrated by the through hole 201. The two impellers 210 and the mounting ring 220 together define the annular cavity 202. Here, the impeller 210 is essentially a block that is roughly disk-shaped or cylindrical with a relatively small height. A cross-sectional shape of the two impellers 210 can be set as a perfect circle, as shown in FIG. 7. In this case, a central axis of the impeller 210 is essentially collinear with a rotational axis of the rotating shaft 310, ensuring that the axial, radial, and tangential directions of the impeller 210 at corresponding positions are largely consistent with those of the rotating shaft 310. The mounting ring 220 is essentially a ring-shaped block. When the first rotating shaft 311 includes the step shaft segment 311a and the two assembly shaft segments 311b as described above, the two impellers 210 are assembled with the two assembly shaft segments 311b, respectively. The mounting ring 220 is arranged around a periphery of the step shaft segment 311a and maintains a certain distance from an outer peripheral side wall of the step shaft segment 311a, so as to jointly define a fluid space of the required volume.

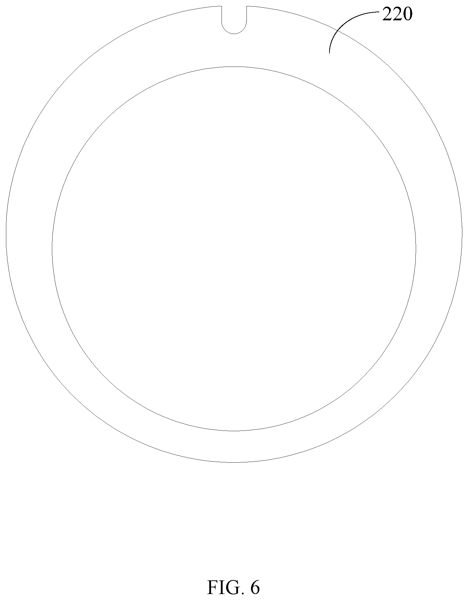

Given the above, to achieve a varying radial width of the fluid space as described, one approach is to configure the step shaft segment 311a of the rotor as an eccentric wheel, meaning a central axis of the step shaft segment 311a is offset from the rotational axis of the first rotating shaft 311. Alternatively, an inner diameter of the annular cavity 202 can be varied along its circumference. Specifically, as shown in FIG. 6, in one embodiment, the inner diameter of the mounting ring 220 varies along its circumference. The mounting ring 220 has sections with larger ring widths and sections with smaller ring widths. The ring width at the connecting portions between the larger and smaller width sections changes uniformly, either increasing or decreasing, ensuring that the inner diameter of the mounting ring 220 varies evenly. An outer contour circle and an inner contour circle of the mounting ring 220 are eccentric, resulting in a wall thickness that is thicker at one end and thinner at the other. Here, a contact angle between the outer wall of the step shaft segment 311a and the inner wall of the mounting ring 220 is denoted as α, typically set to be greater than 45 degrees and less than 100 degrees.

Based on this, in one embodiment, please refer to FIG. 2 and FIG. 7, the two impellers 210 have wheel end faces 211 that are adjacent to each other. At least one recessed portion 212 is formed by recessing the wheel disc end surface 211. The recessed portion 212 is in communication with the liquid inlet channel 111 and the liquid outlet channel 112, respectively. The recessed portion 212 can be set as one or multiple. When multiple grooves 212 are set, the arrangement of each recessed portion 212 on the wheel disc end surface 211 is not limited. For example, as shown in FIG. 7, when two grooves 212 are set, they can be located on opposite radial sides of the impeller 210.

Besides, when multiple grooves 212 are provided, they can either be independently in communication with the liquid inlet channel 111 and the liquid outlet channel 112, or the same recessed portion 212 can be simultaneously in communication with both the liquid inlet channel 111 and the liquid outlet channel 112. When the same recessed portion 212 is in communication with both the liquid inlet channel 111 and the liquid outlet channel 112 at the same time, it can be divided into two separate chambers by a rotating vane passing between the liquid inlet channel 111 and the liquid outlet channel 112.

The recessed portion 212 can be arranged to extend in an arc along the circumferential direction of the impeller 210. In this case, the recessed portion 212 has side walls located on opposite sides in the circumferential direction of the impeller 210. These walls can be designed as inclined flat surfaces or as concave curved surfaces, which helps in the stable flow of liquid.

In one embodiment, axial anti-rotation grooves 230 are provided on the outer peripheral side walls of the two impellers 210 and the mounting ring 220 at corresponding positions. The stator module 200 further includes an anti-rotation pin 240. The anti-rotation pin 240 is sequentially installed through the anti-rotation grooves 230 of each impeller 210 and the mounting ring 220. By sequentially installing the anti-rotation pin 240 through each anti-rotation recessed portion 230, it effectively restricts rotation among the impellers 210 and the mounting ring 220, ultimately contributing to ensuring the stable installation of the rotor module 300 and the stator module 200.

An assembly method for the aforementioned rotor module 300 and stator module 200 can be carried out according to the following steps:
step S1: providing a rotating shaft 310, a plurality of vanes, and a connecting component 330, and installing each of the vanes onto the rotating shaft 310 in sequence, wherein each pair of first vanes 321 is installed onto the rotating shaft 310 via the connecting component 330;
step S2: providing an impeller 210 as a first impeller, fitting a through hole 201 of the first impeller onto a section of the rotating shaft 310, and using a disc end surface 211 of the first impeller to axially block and limit one side of the vanes;
step S3: providing a mounting ring 220 and fit the mounting ring 220 around a radial outer side of the vanes;
step S4: providing another impeller 210 as a second impeller, fitting a through hole 201 of the second impeller onto another section of the rotating shaft 310, and using a disc end surface 211 of the second impeller to axially block and limit the other side of the vanes;
step S5: aligning anti-rotation grooves 230 of the first impeller, the mounting ring 220, and the second impeller; and
step S6: providing an anti-rotation pin 240 and installing the anti-rotation pin 240 sequentially through the anti-rotation grooves 230 of the first impeller, the mounting ring 220, and the second impeller.

In the present embodiment, the rotating shaft 310, the plurality of vanes and the connecting component 330 can be pre-assembled as a whole. Among them, when some of the plurality of vanes are the first vanes 321, the paired first vanes 321 are installed on the rotating shaft 310 via the connecting component 330, while the remaining vanes can be directly or indirectly installed on the rotating shaft 310 through a mounting structure. For example, as mentioned above, the rotating shaft 310 is provided with the vane grooves 311c. When the vane grooves 311c are provided with through holes 311d, the vanes are installed at the corresponding through holes 201 via pin bodies 340. More specifically, when the number of vanes is set to four and each vane is the first vane 321, two connecting components 330 can be inserted into the corresponding through holes 311d, and then each first vane 321 is connected to a protruding end of the connecting component 330 within the vane recessed portion 311c.

When the first impeller is sleeved onto one section of the rotating shaft 310, specifically such as onto an assembly shaft segment 311b of the rotating shaft 310, an axial displacement of each vane on a side where the first impeller is located is restrained and limited. When the mounting ring 220 is sleeved onto the radial outer side of each vane, a radial displacement of each vane is restrained and limited. When the second impeller is sleeved onto another section of the rotating shaft 310, specifically for example onto another assembly shaft segment 311b of the rotating shaft 310, an axial displacement of each vane on a side where the second impeller is located is restrained and limited. As a result, the first impeller, the mounting ring 220 and the second impeller can restrict the degrees of freedom of axial and radial displacement of the rotor module 300, without hindering the rotational movement of the rotor within the rotor module 300.

Next, by adjusting the positions of the anti-rotation grooves 230 on the first impeller, the mounting ring 220, and the second impeller, and aligning them axially to be in communication, the anti-rotation pin 240 is then inserted and installed sequentially through each anti-rotation recessed portion 230. This effectively prevents rotation among the first impeller, the mounting ring 220 and the second impeller, ultimately contributing to the secure installation of the rotor module 300 and the stator module 200.

Referring to FIG. 1, FIG. 2, FIG. 8 and FIG. 9, the present invention provides a vane pump 1 which includes a pump housing 100, a stator module 200, and a rotor module 300. The pump housing 100 forms a cavity 110. The cavity 110 is provided with a liquid inlet channel 111 and a liquid outlet channel 112. The stator module 200 is arranged in the pump housing 100. The stator module 200 is penetrated along a first direction with a through hole 201. Additionally, an annular cavity 202 is concavely formed around a periphery of the through hole 201. The annular cavity 202 is in communication with the through hole 201. The rotor module 300 and the stator module 200 together define a fluid space in the annular cavity 202. The fluid space is in communication with the liquid inlet channel 111 and the liquid outlet channel 112, respectively. A radial width of the fluid space is variably configured. The rotor module 300 includes a rotor, a plurality of vanes, and a connecting component 330. The rotor includes a rotating shaft 310. The rotating shaft 310 extends along the first direction and is rotatably installed in the through hole 201 around its central axis. Each of the vanes is movably installed on the side wall of the rotating shaft 310 along a radial direction of the rotating shaft 310. Each vane includes two first vanes 321 arranged as the pair. The two first vanes 321 in each pair are symmetrically arranged about a central axis of the rotating shaft 310. The connecting component 330 is connected in linkage with each of the first vanes 321 arranged as the pair.

In a technical solution provided by the present invention, since the radial width of the fluid space varies, when the rotating shaft 310 rotates and drives each vane to slide in cooperation with the inner wall of the annular cavity 202, the working volume of the fluid space changes. This achieves a purpose of drawing external liquid into the fluid space through the liquid inlet channel 111 and expelling the liquid from the fluid space through the liquid outlet channel 112. During this process, the two paired first vanes 321 are interconnected via the connecting component 330. This helps coordinate with the rotational centrifugal force of the rotating shaft 310 to adjust each of the paired first vanes 321 to its target position. It not only ensures that the tips of the first vanes 321 closely adhere to the inner wall of the annular cavity 202 but also reduces sliding wear between them to some extent, thereby enhancing the operational quality and reliability of the vane pump 1.

It is understandable that the vane pump 1 includes, but is not limited to, two main components: a working portion and a driving portion. The working portion includes the pump housing 100, the stator module 200, and the rotor module 300 as described above. Since, during operation, the rotating shaft 310 in the rotor module 300 rotates along the axis in the first direction, the driving portion is configured as a single component or multiple components with rotational output. Specifically, the driving portion can be directly configured to include only the driver 400. In this case, the driver 400 can be a motor or a rotary cylinder with rotational output, among others. Alternatively, the driving portion can be configured to include the driver 400 and a transmission assembly. When the driver 400 is, for example, a motor or a rotary cylinder with rotational output, the transmission assembly can be configured as needed to adjust rotational output parameters, such as a gear set, worm gear mechanism, etc. When the driver 400 is, for example, a linear cylinder with linear output, the transmission assembly can be configured as needed to convert linear displacement into rotational displacement, such as a rack and pinion mechanism, screw mechanism, etc.

However, for ease of understanding and to provide sufficient, stable rotational driving force to the rotating shaft 310, in the following embodiments, the working portion is configured to consist solely of the driver 400. The driver 400, for example, is a motor, which has a rotary output shaft 410. The output shaft 410 is connected to the rotating shaft 310, and a rotation axis of the output shaft 410 is essentially collinear with a rotation axis of the rotating shaft 310.

In the working portion, the specific manifestation of the pump housing 100 is not limited. Specifically, the cavity 110 of the pump housing 100 at least extends through the outer wall at one end of the pump housing 100 in the first direction, forming an opening 114 at the outer wall (for ease of understanding, the opening 114 is hereinafter defined as a first opening). The first opening allows the output shaft 410 of the driver 400 to extend into the cavity 110 and connect with a corresponding end of the rotating shaft 310 in the rotor module 300. Alternatively, the first opening allows the corresponding end of the rotating shaft 310 to protrude and connect with the output shaft 410 of the driver 400. Furthermore, the vane pump 1 further includes an end cover 500 (for ease of understanding, the end cover 500 is hereinafter defined as a first end cover). The first end cover is sealingly connected to the pump housing 100 and covers the first opening. The first end cover allows the output shaft 410 of the driver 400 and/or the rotating shaft 310 to pass through.

In a further embodiment, the cavity 110 of the pump housing 100 can extend through an outer wall at both ends of the pump housing 100 in the first direction, forming two openings 114 at the outer wall. One of the two openings 114 is the aforementioned first opening, and the other is a second opening. Additionally, the vane pump 1 further includes two end covers 500. One of the two end covers 500 is the aforementioned first end cover, and the other is a second end cover. The second end cover is sealed to the pump housing 100 and covers the second opening.

Given the above, the liquid inlet channel 111 and the liquid outlet channel 112 are arranged on a side wall of the pump housing 100 located between the first opening and the second opening. The specific forms of the liquid inlet channel 111 and the liquid outlet channel 112 are not limited. The liquid inlet channel 111 and the liquid outlet channel 112 can be created on an inherent shell structure of the pump housing 100. Alternatively, the liquid inlet channel 111 and the liquid outlet channel 112 can also be formed by thickening or thinning a local part of a shell structure of the pump housing 100 and then creating the holes at a thickened or thinned area. The liquid inlet channel 111 and the liquid outlet channel 112 may be straight holes, for example, extending radially, axially, or tangentially relative to the rotating shaft 310. The liquid inlet channel 111 and the liquid outlet channel 112 may also be curved holes, such as extending circumferentially around the rotating shaft 310, or spirally extending both circumferentially and axially along the rotating shaft 310. Of course, the liquid inlet channel 111 and the liquid outlet channel 112 can also be a combination of straight and curved holes, which will not be elaborated further.

Referring to FIG. 8 and FIG. 11, in a further embodiment, the liquid inlet channel 111 and the liquid outlet channel 112 are arranged at intervals and extend side by side in a same direction. Specifically, as shown in the drawings, the liquid inlet channel 111 and the liquid outlet channel 112 are arranged extending radially along the rotating shaft 310 and are spaced apart circumferentially around the rotating shaft 310. The pump housing 100 is provided with a connecting channel 113 between the liquid inlet channel 111 and the liquid outlet channel 112. The connecting channel 113 is in communication with the liquid inlet channel 111 and the liquid outlet channel 112. Similar to the liquid inlet channel 111 and the liquid outlet channel 112, the shape, extension direction, etc., of the connecting channel 113 are not limited. For example, as shown in FIG. 11, the connecting channel 113 extends approximately tangentially to the rotating shaft 310 at its location. The vane pump 1 further includes an opening/closing component. The opening/closing component is movably arranged in the connecting channel 113 to regulate the conduction and interruption of the connecting channel 113. Specifically, the opening/closing component can be set as, for example, a regulating valve or other structures that can adjust the opening degree of the connecting channel 113. Moreover, specifically, the adjustment stroke of the opening/closing component can be associated with the pressure in the connecting channel 113, the liquid inlet channel 111, and/or the liquid outlet channel 112. For example, the opening/closing component can be associated with the pressure at the liquid outlet channel 112. When the pressure at the liquid outlet channel 112 exceeds a preset threshold, the opening/closing component is in an open state, connecting the liquid inlet channel 111 and the liquid outlet channel 112, allowing liquid at the liquid outlet channel 112 to flow to the liquid inlet channel 111 via the connecting channel 113. Conversely, when the pressure at the liquid outlet channel 112 does not exceed the preset threshold, the opening/closing component is in a closed state, separating the liquid inlet channel 111 and the liquid outlet channel 112, so that the liquid at the liquid outlet channel 112 and the liquid at the liquid inlet channel 111 flow independently.

Furthermore, in further solutions, a filtration structure may be provided at the liquid inlet channel 111, the liquid outlet channel 112, and/or the connecting channel 113 as needed. The filtration structure is configured to filter the passing liquid, trapping impurities. For example, when the filtration structure is placed at the liquid inlet channel 111, it helps ensure that the liquid entering the annular cavity 202 is essentially free of impurities, preventing orifice blockage or movement lag within the annular cavity 202.

In view of any of the above embodiments, referring to FIG. 2 to FIG. 4, in a further solution, the rotating shaft 310 in the rotor module 300 can be configured to include a main shaft 311 and an extension shaft 312 that are integrally formed along an axial direction of the rotating shaft 310. Each of the vanes is arranged on the main shaft 311. The extension shaft 312 extends toward the opening of the through hole 201. The vane pump 1 further includes a driver 400, which has a rotary output shaft 410. The rotary output shaft 410 is detachably connected to the extension shaft 312. The arrangement of the main shaft 311 and the extension shaft 312 allows a part of the rotating shaft 310 for vane installation and a part for connection with the driver 400 to be separated, ensuring that the structural strength and other properties of the part for vane installation and the part for connection with the driver 400 meet the required specifications respectively. For example, by altering structural parameters, materials, etc., of the main shaft 311 and the extension shaft 312, they can be made to have different wear resistance, stiffness, thermal expansion coefficients, and the like.

Among these, the main shaft 311 and the extension shaft 312 can be integrally formed, which helps simplify the installation process of both the main shaft 311 and the extension shaft 312, and ensures that the materials of the main shaft 311 and the extension shaft 312 are essentially consistent, contributing to structural stability. Of course, the main shaft 311 and the extension shaft 312 can also be detachably or non-detachably connected after being formed separately. Detachable connections may include, but are not limited to, screw fastening, snap-fit fastening, adhesive bonding, magnetic attraction, or a combination thereof. Non-detachable connections may include, but are not limited to, welding, heat pressing, or a combination thereof.

Specifically, referring to FIG. 2, in one embodiment, a shaft end of the extension shaft 312 is provided with a connection portion 312a. This connection portion 312a is designed to adaptively connect with a mating structure 411 set on the output shaft 410 of the driver 400. The arrangement of the connection portion 312a and the mating structure 411 helps to simplify and standardize the connection operation between the output shaft 410 of the driver 400 and the extension shaft 312. The specific designs of the connection portion 312a and the mating structure 411 are not limited and can be configured according to actual needs. For example, but not limited to, one of the connection portion 312a and the mating structure 411 may be a threaded fastener, while the other has a threaded hole at a corresponding location, allowing the threaded fastener to engage with the threaded hole. Alternatively, one may be a clip, and the other may have a corresponding clip hole, enabling the clip to be secured in the clip hole, among other possibilities.

Referring to FIG. 2 to FIG. 4, in one embodiment, the rotating shaft 310 includes a main shaft 311. A plurality of mounting recessed portions 311c are spaced apart along a circumferential direction on a side wall of the main shaft 311. A mounting hole 311d is provided at a bottom of each mounting recessed portion 311c. Each vane is movably installed in a corresponding mounting recessed portion 311c. The rotor module 300 further includes a plurality of movable pins 340. Each movable pin 340 is radially movably inserted through a corresponding mounting hole 311d along a radial direction of the rotating shaft 310 and is connected to a corresponding vane. A depth direction of the mounting recessed portion 311c is approximately a radial direction of the main shaft 311. The vane is slidably connected and cooperates with the mounting recessed portion 311c along the radial direction of the main shaft 311, enabling it to have a retracted state where it moves to abut against the bottom wall of the mounting recessed portion 311c, and an extended state where it moves to extend out of the mounting recessed portion 311c and slidably abuts against an inner wall of the annular cavity 202 at a corresponding position. Each movable pin 340 connects each vane and each mounting recessed portion 311c one-to-one, facilitating the mutual switching of each vane between the retracted state and the extended state.

In practical application, the mounting hole 311d can be a counterbore opened at the bottom wall of the mounting recessed portion 311c, based on actual needs. One end of the movable pin 340 extends into the counterbore, while the other end protrudes outside the counterbore. For the two mounting recessed portions 311c corresponding to the two first vanes 321 arranged as the pair, they are also symmetrical about the central axis of the rotating shaft 310. Consequently, the two mounting holes 311d corresponding to the two first vanes 321 arranged as the pair are in communication to form an elongated hole structure, and the two movable pins 340 corresponding to the two first vanes 321 arranged as the pair connect to form an elongated pin structure, which constitutes the connecting component 330. The connecting component 330 is designed as a rigid structure, ensuring that its radial length along the main shaft 311 is essentially fixed, meaning the spacing between the two first vanes 321 arranged as the pair is largely constant. Thus, when one of the two first vanes 321 arranged as the pair contacts the inner wall of the annular cavity 202 and retracts by a certain stroke, the other is driven by the connecting component 330 to extend by the same stroke. Compared to existing technologies relying on vane rotational inertia or springs, this approach helps maintain contact between each first vane 321 and the inner wall of the annular cavity 202 while allowing for appropriate adjustment of the contact force between them as needed. This can reduce frictional wear between them or moderately increase the contact force to ensure that the volume change of the fluid space between adjacent vanes meets the required specifications.

However, it should be noted that under the action of the connecting component 330, when one first vane 321 connected to the connecting component 330 slides and abuts against the inner wall of one side of the annular cavity 202, the other first vane 321 connected to the connecting component 330 can be set to directly slide and abut against the inner wall of the other side of the annular cavity 202, or be set to maintain a certain gap with the inner wall of the other side of the annular cavity 202. When the rotor rotates, the first vane 321 will undergo a certain radial outward movement under centrifugal force, sufficiently compensating for the aforementioned gap and ensuring the sliding abutment of the first vane 321 with the inner wall of the annular cavity 202.

Specifically, in one embodiment, the main shaft 311 includes a laterally protruding annular step stage 311a and an assembly segment 311b located on two axial sides of the annular step stage 311a. Each of the mounting recessed portions 311c is formed on a side wall of the annular step stage 311a, and a bottom surface of each mounting recessed portion 311c is not higher than a radial side surface of the assembly segment 311b. The arrangement of the annular step stage 311a allows for sufficient depth of the mounting recessed portions 311c while ensuring that the main shaft 311 meets the required structural strength. The assembly segment 311b facilitates the installation and fitting of structures located on two axial sides of the annular cavity 202 in the stator module 200, thereby allowing at least a portion of the annular step stage 311a to be accommodated in the annular cavity 202. During the operation of the vane pump 1, part of the liquid flows through the mounting recessed portions 311c to two axial sides of the vane. By ensuring that the bottom surface of the mounting recessed portions 311c is not higher than the radial side surface of the assembly segment 311b, the formation of blocking structures is avoided, preventing unnecessary obstruction to the liquid flow process.

Given the above, in one embodiment, the vanes are arranged at equal intervals along the circumference of the rotating shaft 310 in an even number, such that each of the vanes is the first vane 321. This ensures that each vane has another vane paired with it, and the two are interconnected via the connecting component 330. In practical applications, as shown in FIG. 2, FIG. 4 and FIG. 10, the vanes are arranged at equal intervals along the circumference of the rotating shaft 310 in a set of four. These four vanes divide the main shaft 311/annular step 311a into four equal parts, forming two pairs of first vanes 321. This reduces the number of movable pins 340 to two, which helps simplify the overall structure of the machine while ensuring its operational quality.

In the present embodiment, a length of the movable pin 340 is greater than a diameter of the assembly segment 311b, ensuring that when the movable pin 340 is inserted into the mounting hole 311d, at least one end of the movable pin 340 extends outward beyond the assembly segment 311b and into the mounting recessed portion 311c. Simultaneously, when the opposing first vane 321 is installed into the mounting recessed portion 311c, at least one first vane 321 extends outward beyond the annular stage section 311a. That is, a combined length of the two first vanes 321 and the movable pin 340 is greater than the diameter of the annular stage section 311a.

Furthermore, in one embodiment, a recessed portion 311e is provided at one axial end of the main shaft 311 adjacent to each of the mounting holes 311d, with the recessed portion 311e being in communication with each of the mounting holes 311d. When, as described above, the main shaft 311 includes a ring-shaped stage 311a and two assembly segments 311b, the recessed portion 311e is formed at an axial end of the assembly segment 311b that is farther from the extension shaft 312. The provision of this recessed portion 311e, on one hand, facilitates the formation of each mounting hole 311d, and on the other hand, when all the vanes are first vanes 321, it facilitates communication between corresponding sets of mounting holes 311d. Additionally, the inclusion of the recessed portion 311e also aids in visualizing the installation of each movable pin 340/connecting component 330, making disassembly, replacement, and routine maintenance more convenient.

Furthermore, as described above, the vanes are evenly spaced along the circumference of the rotating shaft 310, arranged in four. These four vanes equally divide the main shaft 311/annular stage 311a into four parts, forming two pairs of first vanes 321, which reduces the number of movable pins 340 to two. In this configuration, a radial cross-section of each movable pin 340 can be semicircular, and when the two movable pins 340 are installed in a cross-stacked manner, their flat surfaces abut against each other. Consequently, a stacking height of the two cross-stacked movable pins 340 is essentially equal to their own diameter, eliminating the need to alter the shape or size of each mounting hole 311d. This allows the mounting holes 311d to remain as circular holes, contributing to structural simplification. Additionally, the two movable pins 340 abut against each other through their flat surfaces, which further facilitates smooth and stable contact, reducing wear and the difficulty of machining and assembly.

Preferably, each pair of movable pins 340 is formed by splitting a cylinder in half, with the diameter of the cylinder matching the inner diameter of the mounting hole 311d.

Furthermore, referring to FIG. 2, in one embodiment, the vane pump 1 further includes a sealing cover 600 and a sealing component 700. The sealing cover 600 is connected to the shaft end of the main shaft 311 and covers the opening of the recessed portion 311e. The sealing component 700 is sandwiched between the shaft end of the main shaft 311 and the sealing cover 600. The sealing cover 600 can be movably closed at the recessed portion 311e to prevent liquid in the mounting recessed portion 311c from leaking through the mounting hole 311d and the recessed portion 311e. The sealing component 700 can be specifically configured as an elastic sealing ring, such as a rubber sealing ring, or as a rigid sealing ring, as long as it ensures a tight connection between the sealing cover 600 and the shaft end of the main shaft 311.

Referring to FIG. 5, in one embodiment, the vane has a first end 321a located in the mounting recessed portion 311c and a second end 321b exposed outside the mounting recessed portion 311c. In a direction from the first end 321a to the second end 321b, at least a portion of the vane adjacent to the second end 321b is configured to gradually narrow in width. This arrangement, on one hand, minimizes the sliding contact surface between the vane and the inner wall of the annular cavity 202, reducing frictional damping between them. On the other hand, it forms flow guide surfaces on the circumferential sides of the first end 321a along the axis 310, which are specifically inclined straight or curved surfaces, facilitating the smooth flow of liquid.

In view of any of the above embodiments, the through hole 201 and the annular cavity 202 in the stator module 200 can be independently defined by a single component, which is generally cylindrical in shape. Alternatively, referring to FIG. 2, FIG. 6 and FIG. 7, in one embodiment, the stator module 200 includes two impellers 210 arranged at intervals along the first direction, and an mounting ring 220 connecting the two impellers 210. The two impellers 210 are penetrated by the through hole 201. The two impellers 210 and the mounting ring 220 together define the annular cavity 202. Here, the impeller 210 is essentially a block that is roughly disk-shaped or cylindrical with a small height, and a cross-sectional shape of the two impellers 210 can be set as a perfect circle as shown in FIG. 7. In this case, a central axis of the impeller 210 is essentially collinear with the rotation axis of the rotating shaft 310, ensuring that the axial, radial, and tangential directions at corresponding positions of the impeller 210 are largely consistent with those of the rotating shaft 310. The mounting ring 220 is essentially a block that is roughly ring-shaped. When the main shaft 311 includes an annular step segment 311a and two assembly segments 311b as described above, the two impellers 210 are assembled correspondingly with the two assembly segments 311b. The mounting ring 220 is arranged around a periphery of the annular step segment 311a and maintains a certain distance from the outer peripheral side wall of the annular step segment 311a, so as to jointly define a fluid space of the required volume.

Given the above, to achieve the variation in the radial width of the fluid space as described, it is possible to configure the annular stage 311a of the rotor as an eccentric wheel shape, meaning that the central axis of the annular stage 311a is offset from the rotational axis of the main shaft 311. Alternatively, the inner diameter of the annular cavity 202 can be varied along its circumference. Specifically, as shown in FIG. 6, in one embodiment, the inner diameter of the mounting ring 220 varies along its circumference. The mounting ring 220 has a section with a larger ring width and a section with a smaller ring width. The ring width at the connecting portion between the larger and smaller ring width sections changes uniformly, either increasing or decreasing, so that the inner diameter of the mounting ring 220 varies uniformly. An outer contour circle and an inner contour circle of the mounting ring 220 are eccentric, resulting in a wall thickness that is thicker at one end and thinner at the other. Here, a contact angle between the outer wall of the annular stage 311a and the inner wall of the mounting ring 220 is α which is generally set to be greater than 45 degrees and less than 100 degrees.

Based on this, in one embodiment, referring to FIG. 2 and FIG. 7, the two disc-shaped components 210 have disc end faces 211 that are disposed adjacent to each other. At least one recessed portion 212 is formed by indentation on the disc end faces 211. The recessed portion 212 is respectively in communication with the liquid inlet channel 111 and the liquid outlet channel 112. The recessed portion 212 can be set as one or multiple. When multiple recessed portions 212 are set, the arrangement of each recessed portion 212 on the disc end surface 211 is not limited. For example, as shown in FIG. 7, when two recessed portions 212 are set, they can be positioned on opposite radial sides of the disc-shaped component 210.

Additionally, when a plurality of recessed portions 212 are provided, they can either independently be in communication with the liquid inlet channel 111 and the liquid outlet channel 112 separately, or the same recessed portion 212 can simultaneously be in communication with both the liquid inlet channel 111 and the liquid outlet channel 112. In the case where the same recessed portion 212 is in communication with both the liquid inlet channel 111 and the liquid outlet channel 112 at the same time, the recessed portion 212 can be divided into two separate chambers by rotating vanes that pass between the liquid inlet channel 111 and the liquid outlet channel 112.

The recessed portion 212 may extend in an arc shape along the circumferential direction of the impeller 210. In this case, the recessed portion 212 has side walls located on opposite sides in the circumferential direction of the impeller 210. These side walls can be configured as inclined flat surfaces or as concave curved surfaces, which helps in the stable flow of liquid.

In one embodiment, axial anti-rotation grooves 230 are provided on the outer peripheral side walls of the two disc-shaped components 210 and the mounting ring 220 at corresponding positions. The stator module 200 further includes an anti-rotation pin 240. The anti-rotation pin 240 is sequentially installed through the anti-rotation grooves 230 of each disc-shaped component 210 and the mounting ring 220. By passing through each anti-rotation recessed portion 230 in sequence, the anti-rotation pin 240 effectively restricts rotation among the disc-shaped components 210 and the mounting ring 220, ultimately contributing to ensuring the stable installation of the rotor module 300 and the stator module 200.

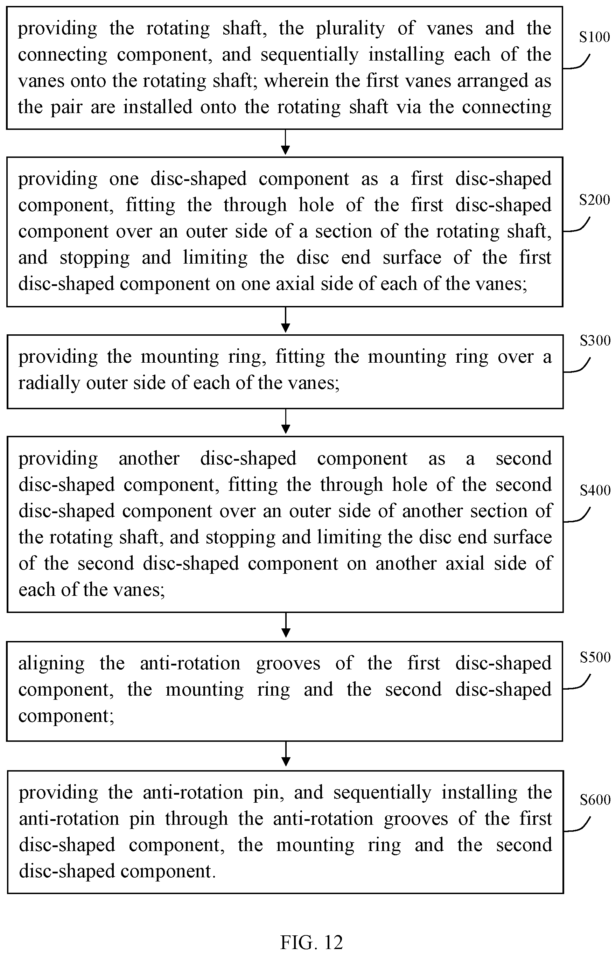

Besides, referring to FIG. 12, the present invention also provides an assembly method for the vane pump 1, primarily referring to an assembly method of the rotor module 300 and the stator module 200, which specifically includes the following steps:
step S100: providing a rotating shaft 310, a plurality of vanes and a connecting component 330, and installing each vane sequentially onto the rotating shaft 310, wherein each pair of first vanes 321 is installed onto the rotating shaft 310 via the connecting component 330;
step S200: providing a impeller 210 as a first impeller, fitting a through hole 201 of the first impeller onto a section of the rotating shaft 310, and using a disk disc end surface 211 of the first impeller to axially block and limit one side of each vane;
step S300: providing an mounting ring 220, and fitting the mounting ring 220 onto a radial outer side of each vane;
step S400: providing another impeller 210 as a second impeller, fitting a through hole 201 of the second impeller onto another section of the rotating shaft 310, and using a disk disc end surface 211 of the second impeller to axially block and limit another side of each vane;
step S500: aligning anti-rotation grooves 230 of the first impeller, the mounting ring 220 and the second impeller; and
step S600: providing an anti-rotation pin 240, and sequentially installing the anti-rotation pin 240 through the anti-rotation grooves 230 of the first impeller, the mounting ring 220, and the second impeller.

In the present embodiment, the rotating shaft 310, the plurality of vanes and the connecting component 330 can be pre-assembled as a whole. Specifically, when some of the plurality of vanes are first vanes 321, the paired first vanes 321 are mounted on the rotating shaft 310 via the connecting component 330, while remaining vanes can be directly or indirectly mounted on the rotating shaft 310 through a mounting structure. For example, as mentioned above, when the rotating shaft 310 is provided with a mounting recessed portion 311c and the mounting recessed portion 311c has a mounting hole 311d, the vanes are mounted at the corresponding through holes 201 via movable pins 340. More specifically, when the number of vanes is set to four and all vanes are first vanes 321, two connecting components 330 can be inserted through the corresponding mounting holes 311d, and then each first vane 321 can be connected to the protruding ends of the connecting components 330 within the mounting recessed portion 311c.

When the first impeller is sleeved onto one section of the rotating shaft 310, specifically such as onto an assembly segment 311b of the rotating shaft 310, a axial displacement of each vane on a side where the first impeller is located is blocked and limited. When the mounting ring 220 is sleeved onto a radial outer side of each vane, the radial displacement of each vane is blocked and limited. When the second impeller is sleeved onto another section of the rotating shaft 310, specifically such as onto another assembly segment 311b of the rotating shaft 310, an axial displacement of each vane on a side where the second impeller is located is blocked and limited. As a result, the first impeller, the mounting ring 220 and the second impeller can restrict the degrees of freedom of axial and radial displacement of the rotor module 300, without hindering the rotational motion of the rotor within the rotor module 300.

Next, by manipulating the positions of the anti-rotation grooves 230 on the first disc-shaped component, the mounting ring 220 and the second disc-shaped component, so that each anti-rotation recessed portion 230 aligns and connects axially, the anti-rotation pin 240 is then sequentially installed through each anti-rotation recessed portion 230. This effectively provides anti-rotation and limiting among the first disc-shaped component, the mounting ring 220 and the second disc-shaped component, ultimately helping to ensure the stable installation of the rotor module 300 and the stator module 200.

In the following embodiments, the polyetheretherketone material is purchased, with a density of 1.32 g/cm²; the graphene nanosheets have an average diameter of 8 µm and an average thickness of 10 nm; the titanium nitride powder has an average particle size of 200 nm; and the concentration of the ammonia solution is 20 wt%.

### Embodiment 1:

A method for preparing a wear-resistant self-lubricating resin material includes the following steps:
S1: adding 0.5 g of titanium nitride powder and 3 ml of ammonia water to a 50 ml ethanol solution, and while stirring, adding 2 ml of tetrabutyl titanate; after the addition is complete, continue stirring and reacting at room temperature for 60 minutes; after the reaction is complete, filtering the reaction solution, washing the precipitate, and drying it to obtain a titanium nitride/titanium oxide composite material; and
S2: in parts by weight, melt-blending 55 parts of polyetheretherketone resin, 5 parts of the titanium nitride/titanium oxide composite material prepared in step S1, 4 parts of graphene nanosheets, 0.2 parts of pentaerythritol stearate, and 0.2 parts of γ-glycidyloxypropyltrimethoxysilane; then, extruding and pelletizing the mixture using a twin-screw extruder to obtain the wear-resistant self-lubricating resin material; wherein during extrusion and pelletization, a rear zone temperature of the twin-screw extruder is 330°C, a middle zone temperature of the twin-screw extruder is 365°C, a front zone temperature of the twin-screw extruder is 380°C, a screw length-to-diameter ratio of the twin-screw extruder is 20, and a screw speed of the twin-screw extruder is 500 r/min.

### Embodiment 2:

A method for preparing a wear-resistant self-lubricating resin material includes the following steps:
S1: adding 0.8 g of titanium nitride powder and 3 ml of ammonia water to a 50 ml ethanol solution, and while stirring, adding 2 ml of tetrabutyl titanate; after the addition is complete, continue stirring the reaction at room temperature for 60 minutes; after the reaction is complete, filtering the reaction solution, washing the precipitate, and drying it to obtain a titanium nitride/titanium oxide composite material; and
S2: in parts by weight, melt-blending 55 parts of polyetheretherketone resin, 5 parts of the titanium nitride/titanium oxide composite material prepared in step S1, 4 parts of graphene nanosheets, 0.2 parts of pentaerythritol stearate, and 0.2 parts of γ-glycidoxypropyltrimethoxysilane; then, extruding and pelletizing the mixture using a twin-screw extruder to obtain the wear-resistant self-lubricating resin material; wherein during extrusion and pelletization, a rear zone temperature of the twin-screw extruder is 330°C, a middle zone temperature of the twin-screw extruder is 365°C, a front zone temperature of the twin-screw extruder is 380°C, a screw length-to-diameter ratio of the twin-screw extruder is 20, and a screw speed of the twin-screw extruder is 500 r/min.

### Embodiment 3:

A method for preparing a wear-resistant self-lubricating resin material includes the following steps:
S1: adding 0.5 g of titanium nitride powder and 5 ml of ammonia water into 50 ml of an ethanol solution, and while stirring, adding 2 ml of tetrabutyl titanate; after the addition is complete, continue stirring and reacting at room temperature for 60 minutes; after the reaction is complete, filtering the reaction solution, washing the precipitate, and drying it to obtain a titanium nitride/titanium oxide composite material; and
S2: in parts by weight, melt-blending 55 parts of polyetheretherketone resin, 5 parts of the titanium nitride/titanium oxide composite material prepared in step S1, 4 parts of graphene nanosheets, 0.2 parts of pentaerythritol stearate, and 0.2 parts of γ-glycidoxypropyltrimethoxysilane; then, extruding and pelletizing the mixture using a twin-screw extruder to obtain the wear-resistant self-lubricating resin material; wherein during extrusion and pelletization, a rear zone temperature of the twin-screw extruder is 330°C, a middle zone temperature of the twin-screw extruder is 365°C, a front zone temperature of the twin-screw extruder is 380°C, a screw length-to-diameter ratio of the twin-screw extruder is 20, and a screw speed of the twin-screw extruder is 500 r/min.

### Embodiment 4:

A method for preparing a wear-resistant self-lubricating resin material includes the following steps:
S1: adding 0.5 g of titanium nitride powder and 3 ml of ammonia water into 50 ml of an ethanol solution, and while stirring, adding 2 ml of tetrabutyl titanate; after the addition is complete, continue stirring and reacting at room temperature for 60 minutes; after the reaction is complete, filtering the reaction solution, washing the precipitate, and drying it to obtain a titanium nitride/titanium oxide composite material; and
S2: in parts by weight, melt-blending 55 parts of polyetheretherketone resin, 8 parts of the titanium nitride/titanium oxide composite material prepared in step S1, 4 parts of graphene nanosheets, 0.2 parts of pentaerythritol stearate, and 0.2 parts of γ-glycidyloxypropyltrimethoxysilane; then, extruding and pelletizing the mixture using a twin-screw extruder to obtain the wear-resistant self-lubricating resin material; wherein during extrusion and pelletization, a rear zone temperature of the twin-screw extruder is 330°C, a middle zone temperature of the twin-screw extruder is 365°C, a front zone temperature of the twin-screw extruder is 380°C, a screw length-to-diameter ratio of the twin-screw extruder is 20, and a screw speed of the twin-screw extruder is 500 r/min.

### Embodiment 5:

A method for preparing a wear-resistant self-lubricating resin material includes the following steps:
S1: adding 0.5 g of titanium nitride powder and 3 ml of ammonia water into 50 ml of an ethanol solution, and while stirring, adding 2 ml of tetrabutyl titanate; after the addition is complete, continue stirring and reacting at room temperature for 60 minutes; after the reaction is complete, filtering the reaction solution, washing the precipitate, and drying it to obtain a titanium nitride/titanium oxide composite material; and
S2: in parts by weight, melt-blending 55 parts of polyetheretherketone resin, 5 parts of the titanium nitride/titanium oxide composite material prepared in step S1, 8 parts of graphene nanosheets, 0.2 parts of pentaerythritol stearate, and 0.2 parts of γ-glycidoxypropyltrimethoxysilane; then, extruding and pelletizing the mixture using a twin-screw extruder to obtain the wear-resistant self-lubricating resin material; wherein during extrusion and pelletization, a rear zone temperature of the twin-screw extruder is 330°C, a middle zone temperature of the twin-screw extruder is 365°C, a front zone temperature of the twin-screw extruder is 380°C, a screw length-to-diameter ratio of the twin-screw extruder is 20, and a screw speed of the twin-screw extruder is 500 r/min.

### Comparative Example 1:

Compared with the Embodiment 5, the addition amount of titanium nitride/titanium oxide composite material is 20 parts, while other conditions are the same as in the Embodiment 5.

### Comparative Example 2:

Compared to the Embodiment 5, the addition amount of graphene nanosheets is 20 parts, while other conditions are the same as in the Embodiment 5.

Next, performance tests are conducted on the wear-resistant self-lubricating resin material prepared above. Specifically, the wear-resistant self-lubricating resin materials from Embodiments 1-5 and Comparative Examples 1-2 are injection molded to produce test specimens. The injection molding conditions are as follows: barrel temperature 360°C, injection pressure 800 MPa, holding time 3 minutes, and cooling time 2 seconds. The injection-molded specimens are heat-treated at a constant temperature of 200°C for 4 hours and then naturally cooled to room temperature.

During testing, a universal testing machine is used to evaluate the mechanical properties of the specimens in accordance with ASTM standards at (23±1°C). The friction performance is tested under the following conditions: a load of 100 kg, a linear speed of 200 rpm, and a continuous test duration of 1 hour.

The test results are shown in Table 1.

**Table 1**

| | Tensile strength, MPa | Bending strength, MPa | Coefficient of friction |
|---|---|---|---|
| Embodiment 1 | 163 | 248 | 0.07 |
| Embodiment 2 | 165 | 252 | 0.06 |
| Embodiment 3 | 166 | 255 | 0.04 |
| Embodiment 4 | 170 | 258 | 0.02 |
| Embodiment 5 | 168 | 262 | 0.01 |
| Comparative Example 1 | 158 | 233 | 0.05 |
| Comparative Example 2 | 153 | 232 | 0.03 |

From the above test results, it can be seen that compared to the Comparative Example, the material prepared by the present invention exhibits higher strength and better wear resistance.

From the test data in Table 1, it can also be seen that compared to Embodiment 1, Embodiment 2 shows a slight increase in the addition of titanium nitride, resulting in certain improvements in the tensile strength, bending strength, and friction performance of the prepared material. This is mainly due to the inherent high strength and hardness of titanium nitride, which enhances the overall performance of the composite material. Moreover, titanium nitride can increase the surface hardness of the material, thereby reducing its friction coefficient. Compared to Embodiment 1, Embodiment 3 exhibits an increase in the amount of ammonia water used, leading to improvements in both the mechanical and friction properties of the material. This is primarily because as the amount of ammonia water increases, the concentration of hydroxide and ammonium ions in the reaction system rises, increasing the pH of the reaction system, which accelerates the hydrolysis rate of tetrabutyl titanate and promotes the coating of titanium dioxide on the surface of titanium nitride, thereby increasing the thickness of the titanium dioxide shell on the titanium nitride surface. As an easily adhesive shell material, the titanium dioxide shell significantly improves the bonding performance between inorganic and organic materials, and to some extent, enhances the performance of the composite material.

From Comparative Example 1, Comparative Example 2, and Embodiment 1, it can be seen that although a large amount of titanium nitride/titanium oxide composite material and graphene nanosheets were added in Comparative Example 1 and Comparative Example 2, the tensile strength and bending strength of the materials decreased. This is mainly due to the poor dispersion and tendency to agglomerate of the inorganic materials in the organic matrix caused by their excessive addition.

The above description is only a preferred embodiment of the present invention and does not limit the patent scope of the present invention. Any equivalent structural modifications made under the inventive concept of the present invention, using the content of the specification and drawings, or direct/indirect application in other related technical fields, are included within the scope of patent protection for the present invention.

## Claims

1. A vane pump, comprising:
a pump housing, the pump housing forming a cavity, and the cavity comprising a liquid inlet channel and a liquid outlet channel;
a stator module, the stator module being disposed in the pump housing, the stator module being provided with a through hole therethrough along a first direction, an annular cavity being recessed around a periphery of the through hole, and the annular cavity being in communication with the through hole; and
a rotor module, the rotor module and the stator module together defining a fluid space in the annular cavity; the fluid space being in communication with the liquid inlet channel and the liquid outlet channel, respectively; a radial width of the fluid space being variably configured; the rotor module comprising a rotating shaft, a plurality of vanes and a connecting component; the rotating shaft extending along the first direction and being rotatably mounted in the through hole about a central axis of the rotating shaft; each of the vanes being movably mounted on a side wall of the rotating shaft along a radial direction of the rotating shaft; each of the vanes comprising two first vanes arranged as a pair; the two first vanes arranged as the pair being symmetrical about the central axis of the rotating shaft; and the connecting component being linkingly connected to each of the first vanes arranged as the pair.

2. The vane pump as claimed in claim 1, wherein the rotating shaft comprises a main shaft; a side wall of the main shaft is provided with a plurality of mounting recessed portions spaced apart along a circumference thereof; a bottom of each mounting recessed portion is provided with a mounting hole; and each of the vanes is movably mounted in the mounting recessed portion;
the rotor module further comprises a plurality of movable pins; each of the movable pins is movably passed through a corresponding mounting hole along the radial direction of the rotating shaft, and is connected to a corresponding vane;
wherein two mounting holes corresponding to the two first vanes arranged as the pair are in communication, and corresponding two movable pins are connected to constitute the connecting component.

3. The vane pump as claimed in claim 2, wherein the vane has a first end disposed in the mounting recessed portion and a second end exposed outside the mounting recessed portion; in a direction from the first end to the second end, at least a portion of the vane adjacent to the second end has a gradually narrowing width.

4. The vane pump as claimed in claim 2, wherein one axial end of the main shaft adjacent to each mounting hole is provided with a recessed portion, and the recessed portion is in communication with each mounting hole.

5. The vane pump as claimed in claim 1, wherein the vanes are provided in an even number equally spaced along a circumference of the rotating shaft, such that each of the vanes is the first vane.

6. The vane pump as claimed in claim 1, wherein the rotating shaft comprises a main shaft and an extension shaft integrally formed with the main shaft along an axial direction of the rotating shaft; each of the vanes is disposed on the main shaft; the extension shaft extends toward an opening of the through hole;
the vane pump further comprises a driver, the driver comprises a rotary output shaft, and the rotary output shaft is detachably connected to the extension shaft.

7. The vane pump as claimed in claim 1, wherein the stator module comprises two disc-shaped components spaced apart along the first direction, and an mounting ring connected between the two disc-shaped components; the two disc-shaped components are provided with the through hole therethrough; the two disc-shaped components and the mounting ring together define the annular cavity;
an inner diameter of the mounting ring varies along a circumference of the mounting ring; the two disc-shaped components have disc end surfaces facing each other; the disc end surfaces are recessed to form at least one recessed portion; and the at least one recessed portion is in communication with the liquid inlet channel and the liquid outlet channel, respectively.

8. The vane pump as claimed in claim 7, wherein outer peripheral side walls of the two disc-shaped components and the mounting ring are provided with anti-rotation grooves axially at corresponding positions;
the stator module further comprises an anti-rotation pin, and the anti-rotation pin is sequentially installed through the anti-rotation grooves of each of the disc-shaped components and the mounting ring.

9. The vane pump as claimed in claim 1, wherein the cavity extends through the pump housing along the first direction to form two openings; and the liquid inlet channel and the liquid outlet channel are disposed beside the openings;
the vane pump further comprises two end covers, and the two end covers are detachably covered on the two openings, respectively.

10. The vane pump as claimed in claim 4, further comprising:
a sealing cover, the sealing cover being connected to a shaft end of the main shaft, and covering an opening of the groove; and
a sealing component, the sealing component being clamped between the shaft end of the main shaft and the sealing cover.

11. The vane pump as claimed in claim 1, wherein the liquid inlet channel and the liquid outlet channel are spaced apart and extend side by side in a same direction; the pump housing defines a connecting channel between the liquid inlet channel and the liquid outlet channel; and the connecting channel is in communication with the liquid inlet channel and the liquid outlet channel;
the vane pump further comprises an opening/closing component, and the opening/closing component is movably disposed in the connecting channel to control conduction and blockage of the connecting channel.

12. An assembly method for the vane pump as claimed in claim 8, comprising:
providing the rotating shaft, the plurality of vanes and the connecting component, and sequentially installing each of the vanes onto the rotating shaft; wherein the first vanes arranged as the pair are installed onto the rotating shaft via the connecting component;
providing one disc-shaped component as a first disc-shaped component, fitting the through hole of the first disc-shaped component over an outer side of a section of the rotating shaft, and stopping and limiting the disc end surface of the first disc-shaped component on one axial side of each of the vanes;
providing the mounting ring, fitting the mounting ring over a radially outer side of each of the vanes;
providing another disc-shaped component as a second disc-shaped component, fitting the through hole of the second disc-shaped component over an outer side of another section of the rotating shaft, and stopping and limiting the disc end surface of the second disc-shaped component on another axial side of each of the vanes;
aligning the anti-rotation grooves of the first disc-shaped component, the mounting ring and the second disc-shaped component; and
providing the anti-rotation pin, and sequentially installing the anti-rotation pin through the anti-rotation grooves of the first disc-shaped component, the mounting ring and the second disc-shaped component.

13. A rotor, comprising a rotating shaft; wherein a side wall of the rotating shaft at least at a local shaft section thereof is provided with a plurality of vane grooves spaced apart along a circumference of the rotating shaft; and a bottom of each vane recessed portion is provided with a through hole;
wherein at least two of the vane grooves are symmetrical about a central axis of the rotating shaft, and corresponding through holes are arranged in communication.

14. The rotor as claimed in claim 13, wherein the number of vane grooves provided is an even number, and each of the vane grooves is equally spaced along the circumference of the rotating shaft.

15. The rotor as claimed in claim 14, wherein the number of vane grooves provided is four.

16. The rotor as claimed in claim 13, wherein the rotating shaft comprises a first rotating shaft and a second rotating shaft axially connected to the first rotating shaft in sequence; each of the vane grooves is disposed on the first rotating shaft; and the second rotating shaft is configured for connection with a driver.

17. The rotor as claimed in claim 16, wherein the first rotating shaft comprises a stepped shaft section which protrudes laterally, and an assembly shaft section which is disposed on two axial sides of the stepped shaft section, respectively; each of the vane grooves is opened on a side wall of the stepped shaft section; and a recessed portion bottom surface of each vane recessed portion is not higher than a radial side surface of the assembly shaft section.

18. The rotor as claimed in claim 17, wherein a shaft end of the assembly shaft section away from the second rotating shaft is provided with a recessed portion, and the through holes are in communication via the groove.

19. The rotor as claimed in claim 16, wherein the first rotating shaft and the second rotating shaft are integrally formed.

20. The rotor as claimed in claim 16, wherein a shaft end of the second rotating shaft is provided with a connecting portion, and the connecting portion is configured for mating connection with a mating portion provided on an output shaft of a driver.

21. A rotor module, comprising:
the rotor as claimed in any one of claims 13 to 20;
a plurality of vanes arranged in one-to-one correspondence with the plurality of vane grooves, and the plurality of vanes being slidably mounted in the plurality of vane grooves along a radial direction of the rotating shaft; and
a plurality of pin bodies movably mounted in the through holes along the radial direction of the rotating shaft, and connected to corresponding vanes; wherein two pin bodies corresponding to two symmetrically arranged vane grooves are linkingly connected, forming a connecting component.

22. A vane pump, comprising the rotor module as claimed in claim 21.

23. A vane pump, comprising a rotor module; the rotor module comprising a rotating shaft, a plurality of vanes and a connecting component; the rotating shaft extending along a first direction and being rotatably arranged about a central axis of the rotating shaft; each of the vanes being movably mounted on a side wall of the rotating shaft along a radial direction of the rotating shaft; each of the vanes comprising two first vanes arranged as a pair; the two first vanes arranged as the pair being symmetrical about the central axis of the rotating shaft; and the connecting component being linkingly connected to each of the first vanes arranged as the pair;
wherein the connecting component is configured as a rigid structure.

24. The vane pump as claimed in claim 23, further comprising a stator module; the stator module being provided with a through hole therethrough along the first direction; and an annular cavity being recessed around a periphery of the through hole; the annular cavity being in communication with the through hole;
wherein the rotor module and the stator module together define a fluid space in the annular cavity; a radial width of the fluid space is variably configured; and the rotating shaft is rotatably mounted in the through hole.

25. The vane pump as claimed in claim 24, wherein when one of the first vanes connected to the connecting component slidably abuts against an inner cavity wall on one side of the annular cavity, another first vane connected thereto is configured to slidably abut against an inner cavity wall on another side of the annular cavity.

26. The vane pump as claimed in claim 24, wherein when one of the first vanes connected to the connecting component slidably abuts against an inner cavity wall on one side of the annular cavity, another first vane connected thereto is configured to have a preset gap with an inner cavity wall on another side of the annular cavity.

27. The vane pump as claimed in claim 23, wherein the rotating shaft comprises a main shaft; a side wall of the main shaft is provided with a plurality of mounting recessed portions spaced apart along a circumference of the main shaft; a bottom of each mounting recessed portion is provided with a mounting hole; each of the vanes is movably mounted in the mounting recessed portion; the rotor module further comprises a plurality of movable pins; each of the movable pins is movably passed through a corresponding mounting hole along the radial direction of the rotating shaft, and is connected to the corresponding vanes; two mounting holes corresponding to the two first vanes arranged as the pair are in communication; and corresponding two movable pins are connected to constitute the connecting component.

28. The vane pump as claimed in claim 27, wherein one axial end of the main shaft adjacent to each mounting hole is provided with a recessed portion, and the recessed portion is in communication with each mounting hole.

29. The vane pump as claimed in claim 27, wherein each of the vanes is the first vane.

30. The vane pump as claimed in claim 27, wherein four vanes are provided and spaced along the circumference of the rotating shaft, such that each of the vanes is the first vane; and two movable pins are provided.

31. The vane pump as claimed in claim 27, wherein a radial cross-sectional shape of each movable pin is semi-circular; and when the two movable pins are installed crossing and stacked with each other, flat surfaces of the two movable pins abut against each other.

32. The vane pump as claimed in claim 31, wherein each two movable pins are formed by dividing a cylinder into two halves, and a diameter of the cylinder is consistent with an inner diameter of the mounting hole.

33. The vane pump as claimed in claim 23, wherein the vane has a first end disposed in the mounting recessed portion and a second end exposed outside the mounting recessed portion; in a direction from the first end to the second end, at least a portion of the vane adjacent to the second end has a gradually narrowing width.

34. The vane pump as claimed in claim 24, further comprising a pump housing forming a cavity, and the cavity being provided with a liquid inlet channel and a liquid outlet channel;
wherein the stator module comprises two disc-shaped components spaced apart along the first direction, and an mounting ring connected between the two disc-shaped components; the two disc-shaped components are provided with the through hole therethrough; the two disc-shaped components and the mounting ring together define the annular cavity;
an inner diameter of the mounting ring varies along a circumference of the mounting ring; the two disc-shaped components have disc end surfaces facing each other; the disc end surfaces are recessed to form at least one mounting recessed portion; and the mounting recessed portion are in communication with the liquid inlet channel and the liquid outlet channel, respectively.

35. The vane pump as claimed in claim 34, wherein outer peripheral side walls of the two disc-shaped components and the mounting ring are provided with anti-rotation recessed portions axially at corresponding positions;
the stator module further comprises an anti-rotation pin, and the anti-rotation pin is sequentially installed through the anti-rotation recessed portions of each of the disc-shaped components and the mounting ring.

36. A vane pump, comprising:
a pump housing forming a cavity; the cavity being provided with a liquid inlet channel and a liquid outlet channel; the liquid inlet channel and the liquid outlet channel being spaced apart; the pump housing being provided with a connecting channel between the liquid inlet channel and the liquid outlet channel; and the connecting channel being in communication with the liquid inlet channel and the liquid outlet channel;
an opening/closing component, the opening/closing component being movably disposed in the connecting channel to control conduction and blockage of the connecting channel; and
a filtration structure disposed at the liquid inlet channel, the liquid outlet channel and/or the connecting channel.

37. The vane pump as claimed in claim 36, wherein the liquid inlet channel and the liquid outlet channel extend side by side in a same direction.

38. The vane pump as claimed in claim 36, wherein the filtration structure is disposed at the liquid inlet channel.

39. The vane pump as claimed in claim 36, wherein the opening/closing component is configured to conduct the connecting channel when a pressure at the liquid outlet channel exceeds a preset threshold, and to block the connecting channel when the pressure at the liquid outlet channel does not exceed the preset threshold.

40. The vane pump as claimed in any one of claims 36 to 39, further comprising:
a stator module, the stator module being disposed in the pump housing, the stator module being provided with a through hole therethrough along a first direction, an annular cavity being recessed around a periphery of the through hole, and the annular cavity being in communication with the through hole; and
a rotor module, the rotor module and the stator module together defining a fluid space in the annular cavity; the fluid space being in communication with the liquid inlet channel and the liquid outlet channel, respectively; a radial width of the fluid space being variably configured; the rotor module comprising a rotating shaft, a plurality of vanes and a connecting component; the rotating shaft extending along the first direction and being rotatably mounted in the through hole about a central axis of the rotating shaft; each of the vanes being movably mounted on a side wall of the rotating shaft along a radial direction of the rotating shaft; each of the vanes comprising two first vanes arranged as a pair; the two first vanes arranged as the pair being symmetrical about the central axis of the rotating shaft; and the connecting component being linkingly connected to each of the first vanes arranged as the pair.

41. The vane pump as claimed in claim 40, wherein the rotating shaft comprises a main shaft; a side wall of the main shaft is provided with a plurality of mounting recessed portions spaced apart along a circumference of the main shaft; a bottom of each mounting recessed portion is provided with a mounting hole; each of the vanes is movably mounted in the mounting recessed portion; the rotor module further comprises a plurality of movable pins; each of the movable pins is movably passed through a corresponding mounting hole along the radial direction of the rotating shaft, and is connected to the corresponding vanes; two mounting holes corresponding to the two first vanes arranged as the pair are in communication; and corresponding two movable pins are connected to constitute the connecting component.

42. The vane pump as claimed in claim 41, wherein four vanes are provided and spaced along the circumference of the rotating shaft, such that each of the vanes is the first vane; and two movable pins are provided.

43. The vane pump as claimed in claim 41, wherein a radial cross-sectional shape of each movable pin is semi-circular; and when the two movable pins are installed crossing and stacked with each other, flat surfaces of the two movable pins abut against each other.

44. The vane pump as claimed in claim 41, wherein one axial end of the main shaft adjacent to each mounting hole is provided with a recessed portion, and the recessed portion is in communication with each mounting hole.

45. The vane pump as claimed in claim 44, further comprising:
a sealing cover, the sealing cover being connected to a shaft end of the main shaft, and covering an opening of the recessed portion; and
a sealing component, the sealing component being clamped between the shaft end of the main shaft and the sealing cover.

46. The vane pump as claimed in claim 40, wherein the stator module comprises two disc-shaped components spaced apart along the first direction, and an mounting ring connected between the two disc-shaped components; the two disc-shaped components are provided with the through hole therethrough; the two disc-shaped components and the mounting ring together define the annular cavity;
an inner diameter of the mounting ring varies along a circumference of the mounting ring; the two disc-shaped components have disc end surfaces facing each other; the disc end surfaces are recessed to form at least one mounting recessed portion; and the mounting recessed portion are in communication with the liquid inlet channel and the liquid outlet channel, respectively.

47. The vane pump as claimed in claim 46, wherein outer peripheral side walls of the two disc-shaped components and the mounting ring are provided with anti-rotation recessed portions axially at corresponding positions;
the stator module further comprises an anti-rotation pin, and the anti-rotation pin is sequentially installed through the anti-rotation recessed portions of each of the disc-shaped components and the mounting ring.

48. The vane pump as claimed in claim 40, wherein the cavity extends through the pump housing along the first direction to form two openings; and the liquid inlet channel and the liquid outlet channel are disposed beside the openings;
the vane pump further comprises two end covers, and the two end covers are detachably covered on the two openings, respectively.

49. A vane pump, comprising:
a stator module comprising two disc-shaped components spaced apart along a first direction, and an mounting ring connected between the two disc-shaped components; the stator module being provided with a through hole therethrough along the first direction; the two disc-shaped components and the mounting ring together defining an annular cavity surrounding the through hole and being in communication with the through hole; and
a rotor module, the rotor module and the stator module together defining a fluid space in the annular cavity; a radial width of the fluid space being variably configured; the rotor module comprising a rotating shaft; the rotating shaft extending along the first direction and being rotatably mounted in the through hole about a central axis of the rotating shaft; the rotating shaft comprising a main shaft; the main shaft comprising an annular step segment which protrudes laterally, and an assembly segment which is disposed on two axial sides of the annular step segment, respectively;
wherein a contact angle between an outer wall of the annular step segment and an inner wall of the mounting ring is α which is configured to be greater than 45 degrees and less than 100 degrees.

50. The vane pump as claimed in claim 49, wherein the rotor module further comprises a plurality of vanes and a connecting component; each of the vanes is movably mounted on a side wall of the rotating shaft along a radial direction of the rotating shaft; each of the vanes comprises two first vanes arranged as a pair; the two first vanes arranged as the pair are symmetrical about the central axis of the rotating shaft; and the connecting component is linkingly connected to each of the first vanes arranged as the pair.

51. The vane pump as claimed in claim 50, wherein the rotating shaft comprises a main shaft; a side wall of the main shaft is provided with a plurality of mounting recessed portions spaced apart along a circumference of the main shaft; a bottom of each mounting recessed portion is provided with a mounting hole; each of the vanes is movably mounted in the mounting recessed portion; the rotor module further comprises a plurality of movable pins; each of the movable pins is movably passed through a corresponding mounting hole along the radial direction of the rotating shaft, and is connected to the corresponding vanes; two mounting holes corresponding to the two first vanes arranged as the pair are in communication; and corresponding two movable pins are connected to constitute the connecting component.

52. The vane pump as claimed in claim 51, wherein a side wall of the annular step segment is provided with the plurality of mounting recessed portions spaced apart along a circumference of the side wall of the annular step segment, and a recessed portion bottom surface of each mounting recessed portion is not higher than a radial side surface of the assembly segment.

53. The vane pump as claimed in claim 51, wherein four vanes are provided and spaced along the circumference of the rotating shaft, such that each of the vanes is the first vane; and two movable pins are provided.

54. The vane pump as claimed in claim 51, wherein a radial cross-sectional shape of each movable pin is semi-circular; and when the two movable pins are installed crossing and stacked with each other, flat surfaces of the two movable pins abut against each other.

55. The vane pump as claimed in claim 51, wherein one axial end of the main shaft adjacent to each mounting hole is provided with a recessed portion, and the recessed portion is in communication with each mounting hole.

56. The vane pump as claimed in claim 49, wherein the rotating shaft comprises a main shaft and an extension shaft integrally formed with the main shaft along an axial direction of the rotating shaft; each of the vanes is disposed on the main shaft; the extension shaft extends toward an opening of the through hole;
the vane pump further comprises a driver, the driver comprises a rotary output shaft, and the rotary output shaft is detachably connected to the extension shaft.

57. The vane pump as claimed in any one of claims 49 to 56, wherein the vane pump further comprises a pump housing forming a cavity, and the cavity is provided with a liquid inlet channel and a liquid outlet channel;
an inner diameter of the mounting ring varies along a circumference of the mounting ring; the two disc-shaped components have disc end surfaces facing each other; and the disc end surfaces are recessed to form at least one mounting recessed portion which is in communication with the liquid inlet channel and the liquid outlet channel respectively.

58. The vane pump as claimed in claim 57, wherein a plurality of mounting recessed portions are spaced apart on the disc end surface.

59. The vane pump as claimed in claim 57, wherein the at least one mounting recessed portion extends in an arc shape along a circumference of the disc-shaped component.

60. The vane pump as claimed in claim 57, wherein outer peripheral side walls of the two disc-shaped components and the mounting ring are provided with anti-rotation recessed portions axially at corresponding positions;
the stator module further comprises an anti-rotation pin, and the anti-rotation pin is sequentially installed through the anti-rotation recessed portions of each of the disc-shaped components and the mounting ring.

61. An assembly method for a vane pump, comprising:
providing a rotating shaft; the rotating shaft comprising a main shaft; a side wall of the main shaft being provided with a plurality of mounting recessed portions spaced apart along a circumference of the side wall of the main shaft; a bottom of each mounting recessed portion being provided with a mounting hole; each two mounting holes being arranged as a pair; and the two mounting holes arranged as a pair being symmetrical about a central axis of the rotating shaft;
providing a plurality of movable pins, and sequentially passing each of the movable pins through each of the mounting holes; the two mounting holes arranged as the pair being configured for a same movable pin to pass through; and
providing a plurality of first vanes, installing the first vanes in the mounting recessed portions, and connecting the first vanes with protruding ends of the movable pins in the mounting recessed portions.

62. The assembly method for the vane pump as claimed in claim 61, wherein four first vanes are provided and equally spaced along the circumference of the rotating shaft; and two movable pins are provided.

63. The assembly method for the vane pump as claimed in claim 62, wherein a radial cross-sectional shape of each movable pin is semi-circular.

64. The assembly method for the vane pump as claimed in claim 63, wherein each two movable pins are formed by dividing a cylinder into two halves, and a diameter of the cylinder is consistent with an inner diameter of the mounting hole.

65. The assembly method for the vane pump as claimed in claim 63, wherein a step of providing the plurality of movable pins, and sequentially passing each of the movable pins through each of the mounting holes; the two mounting holes arranged as the pair being configured for the same movable pin to pass through, comprises:
providing two movable pins, and passing the two movable pins respectively through two sets of mounting holes arranged as a pair; wherein the two movable pins are installed crossing and stacked with each other, with flat surfaces of the two movable pins abutting against each other.

66. The assembly method for the vane pump as claimed in claim 61, wherein the movable pin is configured as a rigid structure.

67. The assembly method for the vane pump as claimed in claim 61, wherein one axial end of the main shaft adjacent to each mounting hole is provided with a recessed portion, and the recessed portion is in communication with each mounting hole.

68. The assembly method for the vane pump as claimed in claim 67, wherein the first vane pump further comprises:
a sealing cover, the sealing cover being connected to a shaft end of the main shaft, and covering an opening of the recessed portion; and
a sealing component, the sealing component being clamped between the shaft end of the main shaft and the sealing cover.

69. The assembly method for the vane pump as claimed in claim 61, wherein the first vane has a first end located in the mounting recessed portion and a second end exposed outside the mounting recessed portion; in a direction from the first end to the second end, at least a portion of the first vane adjacent to the second end has a gradually narrowing width.

70. The assembly method for the vane pump as claimed in any one of claims 61 to 69, wherein after a step of providing the plurality of first vanes, installing the first vanes in the mounting recessed portions, and connecting the first vanes with the protruding ends of the movable pins in the mounting recessed portions, the assembly method further comprises:
providing one disc-shaped component as a first disc-shaped component, fitting the through hole of the first disc-shaped component over an outer side of a section of the rotating shaft, and stopping and limiting a disc end surface of the first disc-shaped component on one axial side of each of the first vanes;
providing an mounting ring, and fitting the mounting ring over a radially outer side of each of the first vanes;
providing another disc-shaped component as a second disc-shaped component, fitting the through hole of the second disc-shaped component over an outer side of another section of the rotating shaft, and stopping and limiting a disc end surface of the second disc-shaped component on another axial side of each of the first vanes;
aligning anti-rotation recessed portions of the first disc-shaped component, the mounting ring and the second disc-shaped component; and
providing an anti-rotation pin, and sequentially installing the anti-rotation pin through the anti-rotation recessed portions of the first disc-shaped component, the mounting ring and the second disc-shaped component.

71. A vane pump, comprising: a rotor module; the rotor module comprising a rotating shaft, a plurality of vanes and a plurality of movable pins; the rotating shaft extending along a first direction and being rotatably mounted in a through hole about a central axis of the rotating shaft; each of the vanes being movably mounted on a side wall of the rotating shaft along a radial direction of the rotating shaft; each of the vanes comprising two first vanes arranged as a pair; the two first vanes arranged as the pair being symmetrical about the central axis of the rotating shaft; and the movable pins being linkingly connected to each of the first vanes arranged as the pair;
wherein the rotating shaft comprises a main shaft; a side wall of the main shaft is provided with a plurality of mounting recessed portions spaced apart along a circumference of the side wall of the main shaft; a bottom of each mounting recessed portion is provided with a mounting hole; each of the vanes is movably mounted in the mounting recessed portion; each of the movable pins is movably passed through a corresponding mounting hole along the radial direction of the rotating shaft, and is connected to a corresponding vane; and two mounting holes corresponding to the two first vanes arranged as the pair are in communication.

72. A vane pump, comprising a rotor module; the rotor module comprising a rotating shaft and a plurality of vanes; the rotating shaft extending along a first direction and being rotatably arranged about a central axis of the rotating shaft; each of the vanes being movably mounted on a side wall of the rotating shaft along a radial direction of the rotating shaft; the rotating shaft comprising a main shaft; a side wall of the main shaft being provided with a plurality of mounting recessed portions spaced apart along a circumference of the side wall of the main shaft; each of the vanes being movably mounted in the mounting recessed portion;
wherein the vane has a first end located in the mounting recessed portion and a second end exposed outside the mounting recessed portion; in a direction from the first end to the second end, at least a portion of the vane adjacent to the second end has a gradually narrowing width.

73. The vane pump as claimed in claim 72, wherein at a portion with gradually narrowing width, wall surfaces on two circumferential sides of the vane form a flow guide surface; and the flow guide surface is an inclined flat surface.

74. The vane pump as claimed in claim 72, wherein at a portion with gradually narrowing width, wall surfaces on two circumferential sides of the vane form a flow guide surface; and the flow guide surface is an arc surface.

75. The vane pump as claimed in claim 72, wherein each of the vanes comprises two first vanes arranged as a pair; the two first vanes arranged as the pair are symmetrical about the central axis of the rotating shaft; a bottom of each mounting recessed portion is provided with a mounting hole;
the rotor module further comprises a rotating shaft connecting component; and the connecting component is movably installed in each of the mounting holes, and is linkingly connected to each of the first vanes arranged as the pair.

76. The vane pump as claimed in claim 75, wherein the rotor module further comprises a plurality of movable pins; each of the movable pins is movably passed through a corresponding mounting hole along the radial direction of the rotating shaft, and is connected to the corresponding vanes; two mounting holes corresponding to the two first vanes arranged as the pair are in communication; and corresponding two movable pins are connected to constitute the connecting component.

77. The vane pump as claimed in claim 76, wherein four vanes are provided and spaced along the circumference of the rotating shaft, such that each of the vanes is the first vane; and two movable pins are provided.

78. The vane pump as claimed in claim 76, wherein a radial cross-sectional shape of each movable pin is semi-circular; and when the two movable pins are installed crossing and stacked with each other, flat surfaces of the two movable pins abut against each other.

79. The vane pump as claimed in claim 78, wherein the movable pin is configured as a rigid structure.

80. The vane pump as claimed in claim 75, wherein one axial end of the main shaft adjacent to each mounting hole is provided with a recessed portion, and the recessed portion is in communication with each mounting hole.

81. The vane pump as claimed in claim 72, further comprising a stator module; the stator module being provided with a through hole therethrough along the first direction; and an annular cavity being recessed around a periphery of the through hole; the annular cavity being in communication with the through hole;
wherein the rotor module and the stator module together define a fluid space in the annular cavity; a radial width of the fluid space is variably configured; and the rotating shaft is rotatably mounted in the through hole around the central axis of the rotating shaft.

82. The vane pump as claimed in claim 81, further comprising a pump housing forming a cavity, and the cavity being provided with a liquid inlet channel and a liquid outlet channel;
wherein the stator module comprises two disc-shaped components spaced apart along the first direction, and an mounting ring connected between the two disc-shaped components; the two disc-shaped components are provided with the through hole therethrough; the two disc-shaped components and the mounting ring together define the annular cavity;
an inner diameter of the mounting ring varies along a circumference of the mounting ring; the two disc-shaped components have disc end surfaces facing each other; the disc end surfaces are recessed to form at least one mounting recessed portion; and the mounting recessed portion are in communication with the liquid inlet channel and the liquid outlet channel, respectively.

83. The vane pump as claimed in claim 82, wherein outer peripheral side walls of the two disc-shaped components and the mounting ring are provided with anti-rotation recessed portions axially at corresponding positions;
the stator module further comprises an anti-rotation pin, and the anti-rotation pin is sequentially installed through the anti-rotation recessed portions of each of the disc-shaped components and the mounting ring.

84. The vane pump as claimed in claim 82, wherein the cavity extends through the pump housing along the first direction to form two openings; and the liquid inlet channel and the liquid outlet channel are disposed beside the openings;
the vane pump further comprises two end covers, and the two end covers are detachably covered on the two openings, respectively.

85. The vane pump as claimed in claim 82, wherein the liquid inlet channel and the liquid outlet channel are spaced apart and extend side by side in a same direction; the pump housing defines a connecting channel between the liquid inlet channel and the liquid outlet channel; and the connecting channel is in communication with the liquid inlet channel and the liquid outlet channel;
the vane pump further comprises an opening/closing component, and the opening/closing component is movably disposed in the connecting channel to control conduction and blockage of the connecting channel.

86. A method for preparing a wear-resistant self-lubricating resin material, comprising following steps:
S1: adding titanium nitride powder and ammonia water into an ethanol solution, adding tetrabutyl titanate while stirring, continuing stirring for reaction after an addition is completed; after the reaction is completed, filtering a reaction liquid, washing precipitate, and drying to obtain a titanium nitride/titanium oxide composite material; and
S2: melt-blending polyetheretherketone resin, the titanium nitride/titanium oxide composite material prepared in step S1, graphene nanosheets, an antioxidant, and a coupling agent; and performing extrusion granulation using a twin-screw extruder to obtain a wear-resistant self-lubricating resin material.

87. The method for preparing the wear-resistant self-lubricating resin material as claimed in claim 86, wherein in step S1, an average particle size of the titanium nitride powder is within a range from 200 nm to 300 nm; and a concentration of the ammonia water is 20-30 wt%.

88. The method for preparing the wear-resistant self-lubricating resin material as claimed in claim 86, wherein in step S1, a dosage ratio of the titanium nitride powder, the ammonia water and the tetrabutyl titanate is (0.5-1) g : (3-5) ml : (2-3) ml.

89. The method for preparing the wear-resistant self-lubricating resin material as claimed in claim 86, wherein in step S1, a temperature for continuing stirring for reaction is room temperature, and a duration is 30-60 min.

90. The method for preparing the wear-resistant self-lubricating resin material as claimed in claim 86, wherein in step S2, an average diameter of the graphene nanosheets is 5-10 µm, and an average thickness of the graphene nanosheets is 5-10 nm.

91. The method for preparing the wear-resistant self-lubricating resin material as claimed in claim 86, wherein in step S2, the antioxidant is one or a mixture of more of pentaerythritol stearate, octadecyl propionate, and triphosphite ester.

92. The method for preparing the wear-resistant self-lubricating resin material as claimed in claim 86, wherein in step S2, the coupling agent is one or a mixture of more of γ-glycidoxypropyltrimethoxysilane, γ-methacryloxypropyltrimethoxysilane, γ-aminopropyltriethoxysilane, and γ-mercaptopropyltriethoxysilane.

93. The method for preparing the wear-resistant self-lubricating resin material as claimed in claim 86, wherein in step S2, the amounts of each component are given in parts by weight as follows: 50-60 parts of polyetheretherketone resin, 5-10 parts of titanium nitride/titanium oxide composite material, 3-8 parts of graphene nanosheets, 0.1-0.5 parts of antioxidant, and 0.1-0.5 parts of coupling agent.

94. The method for preparing the wear-resistant self-lubricating resin material as claimed in claim 86, wherein in step S2, during extrusion granulation, a rear zone temperature of the twin-screw extruder is 320-350°C, a middle zone temperature of the twin-screw extruder is 360-370°C, a front zone temperature of the twin-screw extruder is 370-410°C, a screw length-to-diameter ratio is 15-25, and a screw speed is 200-800 r/min.

95. An application of a wear-resistant self-lubricating resin material in a vane pump, wherein the material prepared by the method as claimed in any one of claims 86 to 94 is directly formed into or coated on a stator or a vane surface of the vane pump.
